# EUROPÄISCHE PATENTSCHRIFT

(11) **EP 4 263 251 B1**
(45) Veröffentlichungstag und Bekanntmachung des Hinweises auf die Patenterteilung: **23.09.2026**
(21) Anmeldenummer: 21835181.5
(22) Anmeldetag: 02.12.2021
(51) Int. Cl.: B60G 17/052

(54) **LUFTTROCKNERGEHÄUSE, LUFTTROCKNERANORDNUNG, DRUCKLUFTVERSORGUNGSANLAGE, FAHRZEUG**
AIR DRYER HOUSING, AIR DRYER ARRANGEMENT, PRESSURED AIR SUPPLIER DEVICE, VEHICLE
BOÎTIER DE DÉSHUMIDIFICATEUR D'AIR, AGENCEMENT DE DÉSHUMIDIFICATEUR, DISPOSITIF D'ALIMENTATION D'AIR EN SURPRESSION, VÉHICULE

(30) Priorität: 21.12.2020 DE 102020134359
(43) Veröffentlichungstag der Anmeldung: 25.10.2023
(73) Patentinhaber: ZF CV Systems Europe BV, 1170 Brüssel (BE)
(72) Erfinder: STABENOW, Uwe, 30880 Laatzen (DE); BREDBECK, Klaus, 31628 Landesbergen (DE)
(74) Vertreter: Rabe, Dirk-Heinrich
(86) Internationale Anmeldenummer: PCT/EP2021/083932
(87) Internationale Veröffentlichungsnummer: WO 2022/135864

(56) Entgegenhaltungen:
- DE-A1- 102011 109 500
- DE-A1- 102012 005 308
- US-A1- 2020 079 170

## Beschreibung

Die Erfindung betrifft ein Lufttrocknergehäuse gemäß dem Oberbegriff des Anspruchs 1. Die Erfindung betrifft auch eine Lufttrockneranordnung gemäß dem Anspruch 11, eine Druckluftversorgungsanlage gemäß dem Anspruch 12 und ein Fahrzeug gemäß dem Anspruch 13.

Lufttrocknergehäuse, insbesondere für Fahrzeuge, sind allgemein bekannt und bevorzugt zur Bildung einer Lufttrockneranordnung ausgebildet, um insbesondere mittels eines Trockenmittels verdichteter Druckluft Feuchtigkeit zu entziehen.

DE 10 2005 062 573 A1 beschreibt ein Steuerventil, insbesondere Luftdrucksteuerventil für ein Kraftfahrzeug, mit einem eingangs genannten Lufttrocknergehäuse. Das Lufttrocknergehäuse ist dort mittels eines Gehäusedeckels verschlossenen Ventilgehäuse gebildet und mit einem in dem Ventilgehäuse gegen den Gehäusedeckel verschiebbaren Ventilkolben, wobei eine den Gehäusedeckel gegenüber dem Ventilgehäuse abdichtende Deckeldichtung vorgesehen ist. Ein derartiger Ansatz sieht bereits grundsätzlich vorteilhaft eine Integration von Teilen eines zur Entlüftung geeigneten Steuerventils in einen Gehäusedeckel vor, der jedoch noch auf das Trocknergehäuse aufbaut. Allerdings ist dies noch verbesserungswürdig, insbesondere hinsichtlich der trockenmittelseitigen Nutzung von verfügbarem Raum.

EP 2 651 671 B1 beschreibt eine Druckluftversorgungsanlage zum Betreiben einer Pneumatikanlage, insbesondere einer Luftfederanlage eines Fahrzeugs, aufweisend: eine Luftzuführung und einem Luftverdichter zur Versorgung einer Druckluftzuführung mit Druckluft, eine Entlüftungsleitung mit einer Entlüftungsventilanordnung in Form einer steuerbaren Magnetventilanordnung mit einem Magnetteil und einem Pneumatikteil und mit einem Entlüftungsanschluss zum Ablassen von Luft, und eine Druckluftversorgungsleitung, mit einem Lufttrockner und einem Druckluftanschluss zur Versorgung der Pneumatikanlage mit Druckluft, wobei in nicht angesteuertem Zustand des Magnetteils der Magnetventilanordnung der Pneumatikteil der Magnetventilanordnung geöffnet ist. Bei dem in EP 2 651 671 B1 beschriebenen Ansatz ist vorgesehen, dass der unmittelbar über den Magnetteil aktuierbare Pneumatikteil in einer Zweigleitung der Druckluftversorgungsleitung zwischen einem druckseitigen Ventilanschluss und einem steuerseitigen Ventilanschluss der Zweigleitung geöffnet ist. Bei dem in EP 2 651 671 B1 beschriebenen Ansatz ist weiterbildend bereits grundsätzlich vorteilhaft vorgesehen, die Entlüftungsventilanordnung in integrierter Weise am Trocknergehäuse, jedoch nicht innerhalb des Trockenmittelbehälters, anzuordnen. Auch ist bei dem in EP 2 651 671 B1 beschriebenen Ansatz die Entlüftungsventilanordnung ist als Magnetventilanordnung ausgebildet.

Trotz derartiger, bereits einen verbesserten Aufbau grundsätzlich berücksichtigenden Ansätzen, sind Lufttrocknergehäuse weiter verbesserungswürdig.

DE10 2012 005345 A1 beschreibt eine andere Druckluftversorgungsanlage, die im Unterschied zu den vorgenannten ein Doppelkammer-Trocknergehäuse aufweist und in fortschrittlicher Weise zum Betreiben einer Pneumatikanlage, insbesondere einer Luftfederanlage eines Fahrzeugs ausgebildet ist. Diese Druckluftversorgungsanlage mit Doppelkammer-Trocknergehäuse weist auf: eine Druckluftzuführung, einen Druckluftanschluss zur Pneumatikanlage und einen Entlüftungsanschluss zur Umgebung; zwischen der Druckluftzuführung und dem Druckluftanschluss eine Pneumatikhauptleitung, die einen Lufttrockner und ein entsperrbares Rückschlagventil einer Ventilanordnung aufweist; zwischen dem Druckluftanschluss und dem Entlüftungsanschluss eine Entlüftungsleitung mit einem Entlüftungsventil einer Ventilanordnung. Dort ist vorgesehen, dass die Ventilanordnung in einem Ventilgehäusemodul angeordnet ist, wobei das Ventilgehäusemodul über einen Flansch modular an die Druckluftversorgungsanlage anbringbar ist, wobei das Ventilgehäusemodul eine dem Flansch gegenüberliegend angeordnete Stufenbohrung aufweist, in der zur Bildung des entsperrbaren Rückschlagventils und des Entlüftungsventils ein gestufter Relaiskolbens druckaktuierbar beweglich angeordnet ist, wobei eine Abfolge von aufeinanderfolgenden Abschnitten der Stufenbohrung entlang einer Ventilachse mit jeweils verjüngtem Querschnitt gebildet ist, wobei dieser eine Abfolge von aufeinanderfolgenden Abschnitten des Relaiskolbens entlang der Ventilachse mit jeweils verjüngtem Querschnitt zugeordnet ist.

DE 10 2011 109500 A1 offenbart eine Druckluftversorgungsanlage mit einem Lufttrockner, dessen Trockenbehälter ein Trockenmittel aufnimmt. In einer Einbuchtung des Trockenbehälters ist ein Steuerventil angeordnet, während ein entsperrbares Unidirektionalsperrventil bzw. Rückschlagventil im Deckelbereich des Trockenbehälters aufgenommen ist. Der Ventilkörper ragt dabei teilweise in den Bereich des Trockenbehälters hinein. Durch Betätigung des Ventils kann eine Druckluftströmung zum Befüllen der Pneumatikanlage freigegeben oder zum Entlüften und Regenerieren des Lufttrockners in Gegenrichtung geführt werden.

Trotz derartiger, bereits vorteilhafter, insbesondere eine Entlüftung und Regeneration einer Lufttrockneranordnung berücksichtigende Ansätze, sind Lufttrocknergehäuse weiterhin verbesserungswürdig.

Lufttrocknergehäuse sind insbesondere verbesserungswürdig hinsichtlich eines möglichst kompakten und Bauraum sparenden Aufbaus, einer einfachen Montage, einer geringen Geräuschentwicklung im Betrieb, einer geringen Fehleranfälligkeit und/oder einer möglichst hohen Effektivität der Trocknung. Wünschenswert wäre es, die Funktion eines Lufttrocknergehäuses hinsichtlich mindestens eines der genannten Aspekte zu verbessern. Insbesondere soll ein Bauraum sparender Aufbau einer Lufttrockneranordnung erreicht werden.

An dieser Stelle setzt die Erfindung an, deren Aufgabe es ist, in verbesserter Weise ein Lufttrocknergehäuse anzugeben, bei dem mindestens eines der genannten Aspekte verbessert ist.

Die Aufgabe, betreffend die Lufttrockneranordnung, wird durch die Erfindung mit einer Lufttrockneranordnung des Anspruchs 1 gelöst.

Die Erfindung geht aus von der Erkenntnis, dass eine möglichst bauraum- und/oder gewichtssparende Bauweise für ein Lufttrocknergehäuse einer Lufttrockneranordnung, insbesondere bei einem Einsatz in einem Fahrzeug, vorteilhaft ist.

Der Ventilkörper und der Ventilkolben, insbesondere die Entlüftungsventileinheit, die wichtig sind für eine effektive Regeneration des Trockenmittels der

Lufttrockneranordnung, tragen bei Lufttrockneranordnungen und/oder Lufttrocknergehäusen gemäß dem Stand der Technik stets signifikant zum Bauraum und Gewicht bei, insbesondere durch pneumatische Leitungen und ein Gehäuse für die Entlüftungsventileinheit.

Die Erfindung schließt die Erkenntnis ein, dass dadurch, dass die Anschlusseinrichtung trockenmittelseitig einen in den Trockenmittelbehälter hineinragenden Ventilkörper aufweist, eine Integration des Ventilkörpers und damit des Ventilkolbens, bzw. der Entlüftungsventileinheit, in den Trockenmittelbehälter des Lufttrocknergehäuses erfolgt. Dadurch werden vorteilhaft Bauraum und Gewicht eingespart. Insbesondere ist dies der Fall, weil auf ein separates Gehäuse für die Entlüftungsventileinheit verzichtet wird, da das Lufttrocknergehäuse die Entlüftungsventileinheit vollständig einhaust bzw. umschließt und somit die Funktion eines Gehäuses, auch für die Entlüftungsventileinheit, übernimmt.

Durch die in den Trockenmittelbehälter hineinragende Anordnung des Ventilkörpers ist die Entlüftungsventileinheit Trockenmittelbehälter vorteilhaft nahe am Trockenmittel positioniert, wodurch eine effektive Regenerierung des Trockenmittels in verbesserter Weise möglich ist. Insbesondere wird durch die Nähe zwischen der Entlüftungsventileinheit und dem Trockenmittel weniger Luft, insbesondere weniger Totluft, zur Durchströmung des Trockenmittels und zum Abtransport der aufgenommenen Feuchtigkeit benötigt, wodurch weniger - vorher unter einem Energieaufwand verdichtete - Druckluft zum Regenerieren aufgewendet werden muss. Durch diesen reduzierten Luftaufwand zum Entlüften wird vorteilhaft auch die Dauer und Lautstärke der Geräuschemission beim Entlüften reduziert.

Durch die in den Trockenmittelbehälter hineinragende Anordnung des Ventilkörpers Trockenmittelbehältergemäß dem Konzept der Erfindung, insbesondere zur Bildung der Entlüftungsventileinheit, kann vorteilhaft der Abstand zwischen dem Trockenmittel und pneumatischen Anschlüssen, insbesondere der Anschlusseinrichtung vergrößert werden, wodurch ebenfalls der Abstand vom Trockenmittel zu weiteren, sich möglicherweise im Betrieb erwärmenden Komponenten der Druckluftversorgungsanlage, insbesondere einem Zylinder des Verdichters, vergrößert werden kann. Hierdurch kann eine Erwärmung des Trockenmittels durch umliegende Komponenten vorteilhaft verringert werden, was sich vorteilhaft auf eine Reduktion des Taupunkts auswirken und die Effektivität der Regeneration weiter steigern kann.

Auch werden Geräusche, die durch die als pneumatisches Relaisventil gebildeten Entlüftungsventileinheit mit dem Ventilkörper und dem Ventilkolben, und insbesondere durch die Axialbewegung des Ventilkolbens, hervorgerufen werden, durch die Integration des Ventilkörpers in den Trockenmittelbehälter von dem Lufttrocknergehäuse vorteilhaft gedämpft und sind somit von außen weniger wahrnehmbar.

Durch mindestens eine dieser genannten vorteilhaften Steigerungen der Effektivität und/oder Effizienz der Trockneranordnung mit einem Lufttrocknergehäuse gemäß dem Konzept der Erfindung kann - insbesondere bei mindestens gleichbleibender Trocknerleistung - vorteilhaft auf eine Menge an Trockenmittel verzichtet werden, insbesondere die Menge, die durch das Vorhandensein der Entlüftungsventileinheit innerhalb des Lufttrocknergehäuses nicht im Lufttrocknergehäuse zur Verfügung steht. Dies bedeutet besondere, dass durch die gemäß dem Konzept der Erfindung erreichten Effizienz- und/oder Effektivitätssteigerungen der für die Entlüftungsventileinheit erforderliche Platzbedarf bereits durch das eingesparte Trockenmittel innerhalb des Lufttrocknergehäuses geschaffen werden kann, insbesondere ein Trockenmittelbehälter trotz der Integration des Ventilkörpers und des Ventilkolbens nicht notwendigerweise vergrößert werden muss.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere ist die zweite Richtung, insbesondere Regenerationsrichtung, der ersten Richtung, insbesondere Förderrichtung, entgegengerichtet. "Mechanisch verbindbar" bedeutet insbesondere "befestigbar". Die Regenerationsrichtung ist der Förderrichtung insbesondere im Bereich des Behälterinnenraums des Trockenmittelbehälters - insbesondere in dem das Trockenmittel aufnehmenden Teil des Behälterinnenraums, dem sogenannten Trockenmittelbett - entgegengerichtet. Der Ventilkolben ist vollständig im Ventilkörper aufgenommen.

Die Trockneranordnung ist insbesondere eine regenerative Trockneranordnung.

Das Lufttrocknergehäuse ist insbesondere für eine regenerative Trockneranordnung ausgebildet. Eine regenerative Trockneranordnung ist vorteilhaft ausgebildet, in regelmäßigen Zeitabständen, insbesondere durch eine Regenerationsströmung, regeneriert zu werden und weist dadurch vorteilhaft, insbesondere im Vergleich zu Einweg-Trocknerkartuschen, eine relativ lange Lebensdauer auf. Insbesondere entspricht die Lebensdauer einer regenerativen Trockneranordnung der Lebensdauer der Druckluftversorgung oder der Druckluftversorgungsanlage oder des Fahrzeugs, in dem die regenerative Trockneranordnung verbaut ist. Der Ventilkörper ist vorteilhaft mit der Anschlusseinrichtung fest verbunden.

Insbesondere ist vorgesehen, dass die Anschlusseinrichtung und der Trockenmittelbehälter ausgebildet sind, das Lufttrocknergehäuse und/oder die Lufttrockneranordnung vollständig einzuhausen, insbesondere zusammen eine äußere Begrenzung eines Behälterinnenraums des Lufttrocknergehäuses zu bilden.

Insbesondere ist vorgesehen, dass die Anschlusseinrichtung, insbesondere der Anschlussflansch, mechanisch verbindbar ist zum pneumatischen Anschließen des Trockenmittelbehälters mittels der Anschlusseinrichtung an die Druckluftversorgung mit einer Druckluftströmung, insbesondere eine Druckluftversorgungsanlage.

Im Rahmen der Erfindung ist vorgesehen, dass die Anschlusseinrichtung den in den Trockenmittelbehälter hineinragenden Ventilkörper einstückig ausbildet. Dies bedeutet, dass die Anschlusseinrichtung, bzw. der Anschlussflansch oder der Trocknerflansch einer als Anschlussgruppe ausgebildeten Anschlusseinrichtung, und der Ventilkörper als ein integrales, insbesondere stoffschlüssig verbundenes, Bauteil gebildet sind, bevorzugt als Kunststoffspritzgussteil. Ein derartiges, integrales Bauteil kann vorteilhaft einfach hergestellt werden. Vorteilhaft kann der Trockenmittelbehälter ebenfalls als Kunststoffspritzgussteil ausgebildet sein. In einer derartigen Weiterbildung wird insbesondere vorteilhaft erreicht, dass der Trockenmittelbehälter, und der mit der Trockenmittelbehälter im montierten Zustand verbundenen Anschlusseinrichtung die übrigen Komponenten der Lufttrockneranordnung, insbesondere das Trockenmittel und die Entlüftungsventileinheit, vollständig umfassen.

Im Rahmen einer bevorzugten Weiterbildung ist vorgesehen, dass die Entlüftungsventileinheit vollständig in den Trockenmittelbehälter hineinragt, insbesondere vollständig innerhalb des Trockenmittelbehälters angeordnet ist. Dies bedeutet insbesondere, dass die Entlüftungsventileinheit vollständig vom Trockenmittelbehälter und/oder dem aus dem Trockenmittelbehälter und der Anschlusseinrichtung gebildeten Lufttrocknergehäuse umgeben ist. In einer derartigen Weiterbildung übernimmt der Trockenmittelbehälter und/oder die Anschlusseinrichtung vorteilhaft vollständig die Funktion eines Gehäuses für die Entlüftungsventileinheit. Insbesondere ist ein Ventilkörperdurchmesser, der - insbesondere Ventilkörper und Montageklammern aufweisenden - Entlüftungsventileinheit kleiner, bevorzugt geringfügig kleiner, als ein innerer Trockenmittelbehälterdurchmesser des Behälterinnenraums des Trockenmittelbehälters, insbesondere der ersten Kammer und/oder der zweiten Kammer. Insbesondere ist der Ventilkörperdurchmesser derart kleiner als der Trockenmittelbehälterdurchmesser, dass ein resultierender Strömungsspalt einen für eine benötigte Druckluftströmung geeigneten Querschnitt aufweist. Insbesondere ist zwischen dem Trockenmittelbehälter und der Entlüftungsventilanordnung mindestens ein Strömungsspalt vorgesehen, durch den eine Druckluftströmung an der Entlüftungsventileinheit vorbei, insbesondere zwischen dem Trockenmittel und dem Pneumatikanschluss und/oder zwischen einer Regenerationspassage und dem Trockenmittel, strömen kann.

Vorteilhaft ist vorgesehen, dass der Trockenmittelbehälter einen Behälterinnenraum aufweist, der in eine erste Kammer und eine zweite Kammer geteilt ist. Vorzugsweise erfolgt dies mittels eines sich entlang einer Längserstreckung des Trockenmittelbehälters erstreckenden Steges, wobei die erste Kammer und die zweite Kammer, insbesondere über wenigstens eine Öffnung im Steg, pneumatisch verbunden sind. Insbesondere sind die erste Kammer und die zweite Kammer pneumatisch in Reihe geschaltet.

Eine derartige Lufttrockneranordnung mit einer ersten Kammer und einer zweiten Kammer kann insbesondere als Doppelkammer-Lufttrockner ausgebildet sein. Die erste und die zweite Kammer als solche sind bevorzugt im Wesentlichen identisch dimensioniert, und weisen insbesondere einen im Wesentlichen hohlzylindrischen Behälterinnenraum auf. Ein hohlzylindrischer Behälterinnenraum ist vorteilhaft geeignet für die Aufnahme einer Entlüftungsventileinheit, insbesondere mit einem in Wesentlichen zylindrisch ausgebildeten Ventilkörper.

In einem Lufttrocknergehäuse sind bevorzugt mehrere, insbesondere sämtliche pneumatischen Anschlüsse an einer Seite, insbesondere einer Anschlussseite der Anschlusseinrichtung, angeordnet, was vorteilhaft eine einfache Montage ermöglicht. Auch sind bevorzugt mehrere, insbesondere sämtliche mechanischen Anschlüsse, an der Anschlusseinrichtung angeordnet. Die mechanischen Anschlüsse sind insbesondere als Montagebohrungen, bevorzugt Durchgansbohrungen und/oder Gewindebohrungen, gebildet. Die Anschlusseinrichtung, insbesondere der Anschlussflansch, ist bevorzugt zur vollständigen Befestigung des Lufttrocknergehäuses, insbesondere an eine Druckluftversorgungsanlage und/oder Druckluftversorgungseinheit, ausgebildet, wobei sich die Montagebohrungen optional zusätzlich in den - hinter der Anschlusseinrichtung angeordneten - Trockenmittelbehälter erstrecken können. Insbesondere können der Trockenmittelbehälter koaxial zu den Montagebohrungen der Anschlusseinrichtung angeordnete Schraubenaufnahmen aufweisen, die insbesondere als Gewindebohrungen ausgebildet sind.

Im Rahmen einer Weiterbildung sind andere Lufttrocknergehäuse eines Doppelkammer-Lufttrockners nicht auf eine parallele Anordnung von erster und zweiter Kammer beschränkt. Auch andere Bauformen von Lufttrocknergehäusen eines Doppelkammer-Lufttrockners sind möglich, beispielsweise mit einer Anordnung von erster und zweiter Kammer hintereinander entlang einer Achse oder konzentrisch. In bevorzugten Weiterbildungen ist das Lufttrocknergehäuse für einen Einzelkammer-Lufttrockner ausgebildet.

Insbesondere ist vorgesehen, dass die Anschlusseinrichtung, insbesondere der Anschlussflansch oder ein Trocknerflansch, einen ersten Anschlussstutzen und einen zweiten Anschlussstutzen aufweist, wobei der erste Anschlussstutzen insbesondere eine erste Vorspannfederaufnahme, aufweist und der zweite Anschlussstutzen durch den Ventilkörper gebildet ist. Insbesondere weist der erste Anschlussstutzen einen Verdichteranschluss auf.

Insbesondere ist eine zwischen der Anschlusseinrichtung, insbesondere dem Anschlussflansch, und dem Trockenmittelbehälter anordnenbare Gehäusedichtung vorgesehen, die ausgebildet ist, die einzelnen Einformungen auf der Anschlussseite des Anschlussflansches druckdicht voneinander zu trennen. Insbesondere weist die Gehäusedichtung dazu eine zu den Einformungen auf der Anschlussseite korrespondierende Geometrie auf.

Im Rahmen einer bevorzugten Weiterbildung ist vorgesehen, dass die Anschlusseinrichtung als Anschlussflansch ausgebildet ist. Ein Anschlussflansch kann einteilig, insbesondere einstückig, ausgebildet sein. Ein Anschlussflansch kann mehrere Anschlussflanschsegmente umfassen, wobei die Anschlussflanschsegmente druckdicht miteinander verbindbar und/oder mit dem Trockenmittelbehälter verbindbar ausgebildet sind. Beispielsweise kann der Anschlussflansch zwei Anschlussflanschsegmente aufweisen, wobei jedes Anschlussflanschsegment einem Anschlussstutzen zugeordnet ist.

Im Rahmen einer bevorzugten Weiterbildung ist vorgesehen, dass die Anschlusseinrichtung als Anschlussgruppe ausgebildet ist mit einem Trocknerflansch und einem Kompressorflansch. Insbesondere ist in dem Trocknerflansch mindestens ein pneumatischer Anschluss angeordnet. Insbesondere ist dem mindestens einen pneumatischen Anschluss in dem Trocknerflansch ein korrespondierender pneumatischer Fernanschluss in dem Kompressorflansch zugeordnet ist und jeder pneumatische Anschluss jeweils mit dem korrespondierenden pneumatischen Fernanschluss, insbesondere über eine Verbindungsleitung, pneumatisch verbunden ist. Eine Verbindungsleitung kann vorteilhaft als Schlauch oder Rohr ausgebildet sein. Eine als Anschlussgruppe ausgebildete Anschlusseinrichtung ermöglicht vorteilhaft, das Lufttrocknergehäuse entfernt von einer Druckluftversorgung, insbesondere einer Druckluftversorgungsanlage oder einer Druckluftversorgungseinheit, anzuordnen und bietet somit vorteilhaft eine erhöhte Flexibilität bei der Nutzung des vorhandenen Bauraums. Eine Verbindungsleitung hat vorteilhaft eine Leitungslänge, die kleiner oder gleich 600 mm, bevorzugt kleiner oder gleich 300 mm, ist. Eine kürzere Leitungslänge führt vorteilhaft zu geringeren Druckverlusten.

Im Rahmen einer bevorzugten Weiterbildung ist vorgesehen, dass die Anschlusseinrichtung, insbesondere der Anschlussflansch, mindestens einen pneumatischen Anschluss, insbesondere einen Verdichteranschluss, einen Pneumatikanschluss, einen Entlüftungsanschluss und/oder einen Regenerationsanschluss, aufweist, wobei der mindestens eine pneumatische Anschluss bevorzugt als Einformung, insbesondere als mindestens ein Kanal und/oder mindestens eine Bohrung, in der Anschlusseinrichtung, insbesondere in dem Anschlussflansch, bevorzugt auf einer Anschlussseite, ausgebildet ist. Als Einformung wird ein durch Wegnahme von Material erzeugtes konstruktives Merkmal, insbesondere ein Loch und/oder eine Bohrung und/oder ein Kanal, verstanden. Eine Einformung kann auf vorteilhaft einfache Weise mittels eines urformenden Herstellungsverfahrens, beispielsweise eines Gießverfahrens, insbesondere eines Kunststoffspritzgießverfahren, hergestellt werden.

Der Trockenmittelbehälter ist insbesondere zwecks Trocknung einer Druckluftströmung durch das Trockenmittel von dieser in einer Förderrichtung von einem Verdichteranschluss zu einem, insbesondere mit einer Pneumatikhauptleitung verbindbaren, Pneumatikanschluss durchströmbar. Der Trockenmittelbehälter ist insbesondere in der Regenerationsstellung von einer Druckluftströmung in einer Regenerationsrichtung, entgegen der Förderrichtung, von einem Regenerationsanschluss zu dem Verdichteranschluss durchströmbar, insbesondere zwecks Regeneration des Trockenmittels.

Im Rahmen einer bevorzugten Weiterbildung ist eine Regenerationsdrossel vorgesehen, die insbesondere als Bohrung der Anschlusseinrichtung, insbesondere im Anschlussflansch, ausgebildet ist. Die Regenerationsdrossel ist insbesondere in Förderrichtung hinter dem Trockenmittel, insbesondere zwischen dem Regenerationsanschluss und dem das Trockenmittel aufnehmenden Teils des Behälterinnenraums, angeordnet. Mittels der Regenerationsdrossel wird die in Regenerationsrichtung strömende Druckluftströmung vorteilhaft entspannt, um ein effektives Trocknen des Trockenmittels gemäß dem Prinzip der Druckwechseladsorption zu ermöglichen. Die Regenerationsdrossel weist hierzu eine relativ geringe Nennweite, beispielsweise zwischen 1,2 mm und 2 mm, auf. Die Nennweite der Regenerationsdrossel ist insbesondere geringer als eine effektive Nennweite der Entlüftungsventileinheit, beispielsweise halb so groß wie diese. Die effektive Nennweite der Entlüftungsventileinheit ist dabei insbesondere durch den Querschnitt des Strömungsspalts in Strömungsrichtung, das heißt Förderrichtung und/oder Regenerationsrichtung, definiert.

Im Rahmen einer bevorzugten Weiterbildung ist vorgesehen, dass der Ventilkörper einen Ventilkörperdurchmesser aufweist, der geringer ist als ein Trockenmittelbehälterdurchmesser des Trockenmittelbehälters, sodass in einem radialen Zwischenraum zwischen dem Ventilkörper und dem Trockenmittelbehälter ein Strömungsspalt gebildet wird zum Führen der Druckluftströmung vorbei an dem Ventilkörper. In einer derartigen Weiterbildung ist der Ventilkörper peripher von der Druckluftströmung umströmbar angeordnet, und zwar sowohl in Förderrichtung als auch in Regenerationsrichtung. Insbesondere wird der Ventilkolben nicht axial durchströmt, weder in Förderrichtung noch in Regenerationsrichtung.

Im Rahmen einer bevorzugten Weiterbildung ist vorgesehen, dass der Ventilkörper und der Ventilkolben eine Entlüftungsventileinheit bilden, die als pneumatisches Relaisventil ausgebildet ist. In einer derartigen Weiterbildung kann insbesondere unter relativ geringem apparativen Aufwand - beispielsweise verglichen mit einer Magnetventilanordnung - eine kompakte Entlüftungsventileinheit realisiert werden.

Im Rahmen einer bevorzugten Weiterbildung ist vorgesehen, dass der Ventilkörper ein Relaissegment und der Ventilkolben ein Kolben-Relaissegment aufweist, wobei der Ventilkolben über das Kolben-Relaissegment axial bewegbar in dem Relaissegment geführt wird und/oder Ventilkörper ein Schaltsegment und der Ventilkolben ein Kolben-Schaltsegment aufweist, wobei der Ventilkolben über das Kolben-Schaltsegment axial bewegbar in dem Schaltsegment geführt wird. Insbesondere ist das Kolben-Relaissegment zylindrisch und das Relaissegment geometrisch korrespondierend dazu hohlzylindrisch ausgebildet. Insbesondere ist das Kolben-Schaltsegment zylindrisch und das Schaltsegment geometrisch korrespondierend dazu hohlzylindrisch ausgebildet. In einer derartigen Weiterbildung wird vorteilhaft eine axiale Führung ermöglicht. Bei einem Ventilkolben mit einem Kolben-Relaissegment und einem Kolben-Schaltsegment wird vorteilhaft eine erhöhte Stabilität ermöglicht, insbesondere kann dann das Kolben-Relaissegment und das Kolben-Schaltsegment jeweils nur eine geringe axiale Erstreckung aufweisen, und trotzdem wird eine zuverlässige axiale Führung ohne hohe Gefahr eines Verkantens bei einer Axialbewegung ermöglicht.

Vorteilhaft ist vorgesehen, dass
- der Ventilkolben eine Relaisfläche und eine Schaltfläche aufweist, wobei die Relaisfläche größer ist als die Schaltfläche, und
- die Relaisfläche über den Regenerationsanschluss mit Druckluft beaufschlagbar ist zum Bewegen des Ventilkolbens in die Regenerationsstellung, in der sich die Schaltfläche von einem Entlüftungsventilsitz des Ventilkörpers abhebt, insbesondere zum Herstellen einer pneumatischen Verbindung zwischen dem Verdichteranschluss und einem Entlüftungsanschluss. Die Druckluft zum Beaufschlagen des Regenerationsanschlusses ist insbesondere eine in Regenerationsrichtung strömende Druckluftströmung und stammt insbesondere aus der Pneumatikanlage, insbesondere aus der Pneumatikhauptleitung, einem Druckspeicher und/oder mindestens einer Luftfeder einer Luftfederanlage. Über das konstruktive Gestalten des Flächenverhältnisses von der Relaisfläche zu der Schaltfläche kann vorteilhaft ein - insbesondere an der Relaisfläche anliegender - Steuerdruck im Verhältnis passend zu einem - insbesondere an der Schaltfläche anliegenden - zu schaltenden Druck eingestellt werden. Insbesondere ist der Ventilkolben im Wesentlichen stufenzylindrisch ausgebildet.

Im Rahmen einer bevorzugten Weiterbildung ist eine Rückstellfeder vorgesehen, die den Ventilkolben in der Förderstellung hält, und, insbesondere beim Bewegen des Ventilkolbens in eine Regenerationsstellung des Ventilkolbens, eine Rückstellkraft auf den Ventilkolben ausübt. Die Rückstellfeder kann vorteilhaft ausgebildet sein, den Ventilkolben zurück auf den Entlüftungsventilsitz zu drücken, insbesondere wenn kein Druck oder ein Druck kleiner als ein oder gleich einem Minimaldruck, am Regenerationsanschluss anliegt.

Mittels einer Rückstellfeder kann der Ventilkolben, insbesondere die Entlüftungsventileinheit, in vorteilhafter Weise die Funktion eines Druckreglers erfüllen. Insbesondere kann über die Auswahl einer Rückstellfederkonstante die Rückstellkraft beeinflusst werden, die von der Rückstellfeder auf den Ventilkolben wirkt. Über die Wahl der Rückstellfederkonstante der Rückstellfeder kann ein Abschaltdruck der Lufttrockneranordnung festgelegt werden. Insbesondere ist der Abschaltdruck der am Regenerationsanschluss anliegende Luftdruck, ab welchem sich der Ventilkolben vom Entlüftungsventilsitz abhebt und die Entlüftungsventileinheit somit in die Entlüftungsstellung schaltet.

Auch kann über die Wahl der Rückstellfederkonstante ein Minimaldruck definiert werden, bei dem - wenn dieser Minimaldruck am Regenerationsanschluss anliegt - der Ventilkolben zurück in die Förderstellung bewegt wird und den Entlüftungsventilsitz verschließt. Durch die Wahl eines ausreichend hohen Minimaldrucks kann vorteilhaft verhindert werden, dass in der Pneumatikanlage enthaltene Druckluft, insbesondere in Luftfedern einer Luftfederanlage gespeicherte Druckluft, vollständig aus dieser entweicht, was sonst zu Schäden an der Pneumatikanlage, insbesondere der Luftfederanlage, führen könnte.

Mittels einer entsprechenden Rückstellfeder können diese auf dem Abschaltdruck und/oder dem Minimaldruck basierenden, für die Sicherheit und Funktionsweise der Druckluftversorgungsanlage relevanten Druckregler-Funktionen vorteilhaft - insbesondere ohne weitere elektronische Regeleinrichtungen - auf mechanische Weise realisiert werden. Gleichwohl sind im Rahmen der Erfindung auch Weiterbildungen mit weiteren, insbesondere elektronisch angesteuerten Ventilen, möglich.

Im Rahmen einer bevorzugten Weiterbildung ist vorgesehen, dass
- der Ventilkörper, insbesondere die Entlüftungsventileinheit, eine Abdeckmembran aufweist, die insbesondere druckdicht, auf dem Ventilkörper befestigt ist zur Bildung eines Ventilinnenraums, wobei
- die Abdeckmembran eine auf der dem Ventilinnenraum zugewandten Seite eine Rückstellfederaufnahme zur Aufnahme der Rückstellfeder aufweist, und/oder
- auf der dem Ventilinnenraum abgewandten Seite eine Vorspannfederaufnahme zur Aufnahme einer Vorspannfeder, insbesondere eine zweite Vorspannfederaufnahme zur Aufnahme einer zweiten Vorspannfeder, aufweist, wobei die Vorspannfeder ausgebildet ist zum Beaufschlagen des Trockenmittels mit einer Vorspannkraft. Die Abdeckmembran ist vorteilhaft luftundurchlässig ausgebildet. Die Abdeckmembran ist vorteilhaft mittels mindestens einer Montageklammer auf dem Ventilkörper befestigt. Insbesondere entspricht die Vorspannfederaufnahme in der Abdeckmembran, insbesondere die zweite Vorspannfederaufnahme, in seiner -zur Aufnahme der Vorspannfeder genutzten-Form einer Vorspannfederaufnahme in einem konventionellen Lufttrocknergehäuse, insbesondere einer ersten Vorspannfederaufnahme. Durch die Abdeckmembran mit der Vorspannfederaufnahme kann die Entlüftungsventileinheit in einen Trockenmittelbehälter integriert werden, vorteilhaft ohne dass der Trockenmittelbehälter konstruktiv angepasst werden muss.

In vorteilhaften Weiterbildungen, in denen das Lufttrocknergehäuse für einen Doppelkammer-Lufttrockner ausgebildet ist mit einer ersten und zweiten Kammer, ist die erste Rückhalteplatte und die zweite Rückhalteplatte unterschiedlich, insbesondere an unterschiedlichen axialen Positionen entlang der Längserstreckung, angeordnet. Dies ist durch das Hineinragen der Entlüftungsventileinheit in die zweite Kammer bedingt. In derartigen Weiterbildungen resultiert in der ersten Kammer und zweiten Kammer ein unterschiedlicher Füllstand mit Trockenmittel.

Die Rückstellfederaufnahme und/oder die Vorspannfederaufnahme sind vorteilhaft als zylindrische oder hohlzylindrische Einprägungen in der Abdeckmembran ausgebildet. Durch die dünnwandige, membranartige Ausbildung der Abdeckmembran können vorteilhaft sowohl die Rückstellfeder als auch die Vorspannfeder mittels eines Bauteils, nämlich der Abdeckmembran, aufgenommen werden, und zwar bevorzugt in sich in axialer Richtung überschneidender Form. Durch eine derartige Ausbildung der Abdeckmembran können sich die Rückstellfeder und die Vorspannfeder in axialer Richtung überschneiden, wodurch eine weiter vorteilhaft bauraumsparende Anordnung der Entlüftungsventileinheit erreicht wird. Die Abdeckmembran ist aus einem geeigneten, insbesondere ausreichend stabilen Werkstoff, beispielsweise Blech, insbesondere Stahlblech, und/oder einem Kunststoff, ausgebildet. Durch eine Abdeckmembran kann der Ventilkörper neben seiner pneumatischen Funktion in der Entlüftungsventileinheit vorteilhaft auch als mechanische Aufnahme für die Vorspannfeder, in vorteilhaften Weiterbildungen zusätzlich auch für die Rückstellfeder genutzt werden. Hierdurch resultiert insbesondere in synergetischer Weise mit der Anordnung des Ventilkörpers in dem Behälterinnenraum eine platzsparende Anordnung der Vorspannfeder und/oder der Rückstellfeder.

Im Rahmen einer bevorzugten Weiterbildung ist ein, zwischen dem Entlüftungsventilsitz und der Schaltfläche angeordnetes, insbesondere aus einem Elastomer gebildetes, Dämpfkissen, und/oder eine zwischen dem Ventilkolben und der Abdeckmembran angeordnete, insbesondere aus einem Elastomer gebildete, Dämpfscheibe vorgesehen. Mittels eines Dämpfkissens kann die Axialbewegung des Ventilkolbens beim Aufsetzen auf den Entlüftungsventilsitz vorteilhaft gedämpft werden, wodurch vorteilhaft eine geräuschärmere und materialschonendere Betriebsweise der Entlüftungsventileinheit erreicht wird. Ein Dämpfkissen ist insbesondere als plane Materialschicht auf die Schaltfläche, insbesondere die gesamte Schaltfläche, des Ventilkolbens aufgebracht, insbesondere geklebt. Analog zum Dämpfkissen kann mittels einer Dämpfscheibe die Axialbewegung des Ventilkolbens beim Erreichen der Abdeckmembran vorteilhaft gedämpft werden. Eine Dämpfscheibe ist insbesondere als planes, ringförmiges Element ausgebildet und bevorzugt an der Abdeckmembran befestigt, insbesondere geklebt.

Im Rahmen einer bevorzugten Weiterbildung ist ein, insbesondere als 2/2-Wege-Magnetventil ausgebildetes, Regenerations-Schaltventil vorgesehen, wobei das Regenerations-Schaltventil ausgebildet ist zum selektiven Herstellen einer pneumatischen Verbindung zwischen einer Pneumatikhauptleitung und/oder einer Pneumatikanlage und/oder einem Druckspeicher auf der einen Seite, und dem Regenerationsanschluss auf der anderen Seite. Mittels eines Regenerations-Schaltventils kann vorteilhaft durch eine selektive Ansteuerung des Regenerationsanschlusses, insbesondere mittels eines Steuergeräts, eine Regeneration einer Lufttrockneranordnung durchgeführt werden.

Die Erfindung führt in einem zweiten Aspekt auf eine Lufttrockneranordnung, insbesondere einer Druckluftversorgungsanlage zum Betreiben einer Pneumatikanlage mit einer Druckluftströmung, insbesondere einer Luftfederanlage eines Fahrzeugs, vorzugsweise eines PKWs, aufweisend
- ein Lufttrocknergehäuse gemäß dem ersten Aspekt der Erfindung, und
- ein Trockenmittel, wobei das Trockenmittel insbesondere lose und/oder granular ausgebildet ist.

Die Erfindung führt in einem dritten Aspekt auf eine Druckluftversorgungsanlage für ein Fahrzeug zum Versorgen einer Pneumatikanlage, insbesondere einer Luftfederanlage eines Fahrzeugs aufweisend ein Lufttrocknergehäuse gemäß dem ersten Aspekt der Erfindung oder eine Lufttrockneranordnung gemäß dem zweiten Aspekt der Erfindung.

Die Erfindung führt in einem vierten Aspekt auf ein Fahrzeug, insbesondere einen PKW, aufweisend ein Lufttrocknergehäuse gemäß dem ersten Aspekt der Erfindung und/oder eine Lufttrockneranordnung gemäß dem zweiten Aspekt der Erfindung und/oder eine Druckluftversorgungsanlage gemäß dem dritten Aspekt der Erfindung.

Bei der Lufttrockneranordnung gemäß dem zweiten Aspekt der Erfindung und/oder der Druckluftversorgungsanlage gemäß dem dritten Aspekt der Erfindung und/oder dem Fahrzeug gemäß dem vierten Aspekt der Erfindung werden die Vorteile des Lufttrocknergehäuses gemäß dem ersten Aspekt der Erfindung vorteilhaft genutzt. Insbesondere führt ein durch das Lufttrocknergehäuse gemäß dem ersten Aspekt der Erfindung resultierender, bauraum- und/oder gewichtssparender Aufbau zu Vorteilen bei einer Lufttrockneranordnung gemäß dem zweiten Aspekt der Erfindung und/oder einer Druckluftversorgungsanlage gemäß dem dritten Aspekt der Erfindung und/oder einem Fahrzeug gemäß dem vierten Aspekt der Erfindung, insbesondere, weil bei Fahrzeugen das Gewicht und der Bauraum von derartigen Komponenten von Druckluftversorgungsanlagen kritische Designparameter sind, die es vorteilhaft zu reduzieren gilt.

Bei einer Druckluftversorgungsanlage gemäß dem dritten Aspekt der Erfindung kann mittels des Lufttrocknergehäuses gemäß dem ersten Aspekt der Erfindung vorteilhaft ein größerer Abstand zwischen dem Trockenmittel und weiteren Komponenten der Druckluftversorgungsanlage, insbesondere einem Verdichter, erreicht werden, um auf diese Weise eine Erwärmung des Trockenmittels zu verringern.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Die Erfindung ist in anhängigen Ansprüchen definiert.

Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1:: eine Lufttrockneranordnung mit einem Lufttrocknergehäuse gemäß einer bevorzugten Ausführungsform entsprechend dem Konzept der Erfindung,
- Fig. 1A:: ausschnittsweise die als Anschlussflansch gebildete Anschlusseinrichtung der in Fig. 1 gezeigten Ausführungsform der Lufttrockneranordnung im Bereich der zweiten Kammer in einer Draufsicht,
- Fig. 1B:: die in Fig. 1 gezeigte Ansicht der Ausführungsform der Lufttrockneranordnung, jedoch mit Darstellung von möglichen Strömungsrichtungen der Druckluftströmung,
- Fig. 1C:: die in Fig. 1A gezeigte Ansicht der Ausführungsform der Lufttrockneranordnung, jedoch mit Darstellung von möglichen Strömungsrichtungen der Druckluftströmung,
- Fig. 1D:: ausschnittsweise einen Querschnitt durch eine bevorzugte Ausführungsform einer konstruktiven Gestaltung einer Druckluftversorgungsanlage mit einer in Fig. 1 gezeigten Lufttrockneranord- nung, in einem Bereich, der einen Verdichter und einen Teil der Lufttrockneranordnung umfasst,
- Fig. 2:: eine perspektivische Außenansicht der in Fig. 1 gezeigten Ausführungsform der Lufttrockneranordnung,
- Fig. 2A:: die in Fig. 2 gezeigte Ansicht der Ausführungsform der Lufttrockneranordnung, jedoch mit Darstellung von möglichen Strömungsrichtungen der Druckluftströmung,
- Fig. 2B:: eine zweite vorteilhafte Ausführungsform eines weiteren Lufttrocknergehäuses mit einer Anschlusseinrichtung, die als Anschlussgruppe ausgebildet ist,
- Fig. 3A:: ein pneumatisches Schaltbild einer ersten besonders bevorzugten Ausführungsform einer Druckluftversorgungsanlage mit einer Lufttrockneranordnung gemäß der zuvor in Fig. 1 bis Fig. 1C und Fig. 2 erläuterten Ausführungsform,
- Fig. 3B, Fig. 3C,: beispielhaft schematisch unterschiedliche Ausführungsformen von Druckluftversorgungsanlagen mit einer Lufttrockneranordnung gemäß der zuvor in Fig. 1 bis Fig. 1C und Fig. 2 erläuterten Ausführungsform, wobei die Bauform der Druckluftversorgungsanlage der Fig. 3B im Wesentlichen eine normal entlüftende Druckluftversorgungsanlage wie in der Fig. 3A ist, die Bauform der Druckluftversorgungsanlage der Fig. 3C im Wesentlichen eine schnell entlüftende Druckluftversorgungsanlage ist,
- Fig. 4:: eine dreidimensionale Explosionsdarstellung der in Fig. 1 gezeigten bevorzugten Ausführungsform einer Lufttrockneranordnung -,
- Fig. 5:: eine Lufttrockneranordnung mit einem Einzelkammer-Lufttrockner, aufweisend ein Lufttrocknergehäuse gemäß einer dritten bevorzugten Ausführungsform entsprechend dem Konzept der Erfindung,
- Fig. 6:: eine perspektivische Außenansicht einer bevorzugten Ausführungsform einer Druckluftversorgungsanlage mit einer in Fig. 1 gezeigten bevorzugten Ausführungsform einer Lufttrockneranord- nung, wobei die Druckluftversorgungsanlage wahlweise realisiert sein kann nach einer der Bauformen der Fig. 3A, Fig. 3B, Fig. 3C,
- Fig. 7:: eine schematische Darstellung eines Fahrzeugs ausgestattet mit einer bevorzugten Ausführungsform einer Druckluftversorgungsanlage, die eine bevorzugte Ausführungsform einer Lufttrockneranordnung gemäß Fig. 1 aufweist.

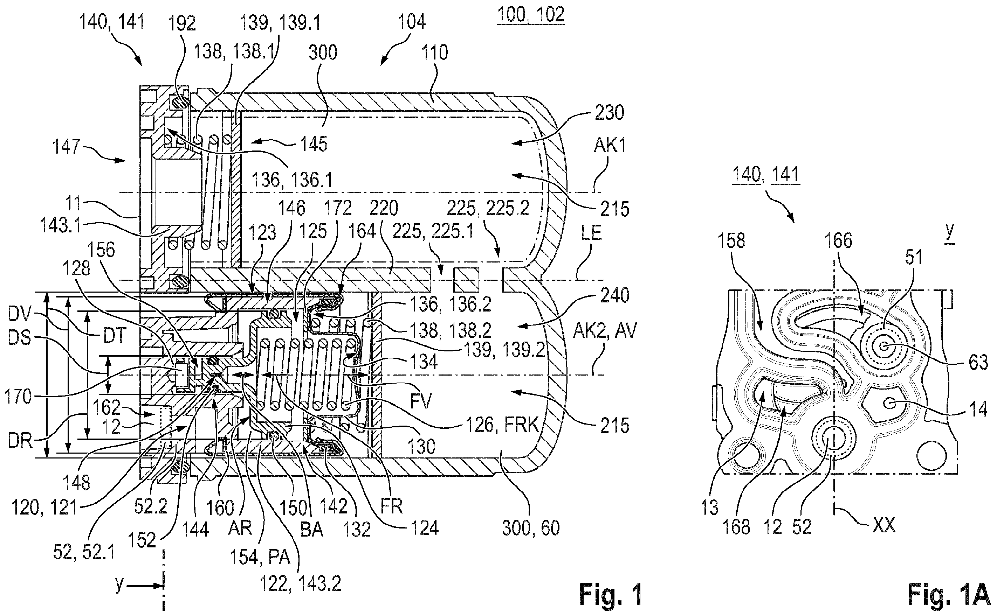

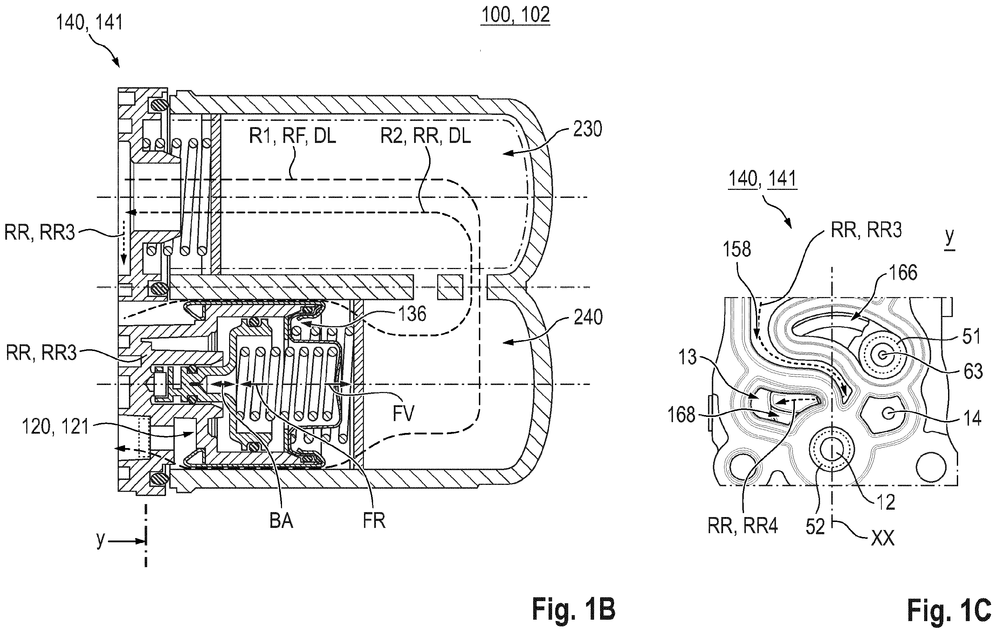

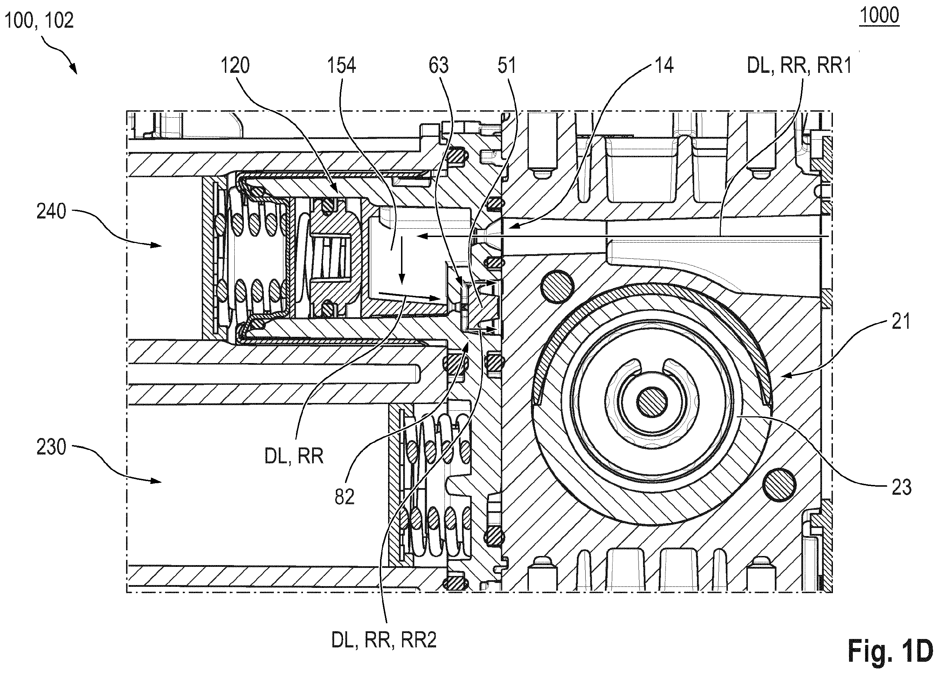

Fig. 1 zeigt ein Lufttrocknergehäuse 104 gemäß einer bevorzugten Ausführungsform entsprechend dem Konzept der Erfindung zur Bildung einer Lufttrockneranordnung 100. Vorliegend ist die Lufttrockneranordnung 100 in Form eines Doppelkammer-Lufttrockners 102 gebildet, bei dem ein Trockenmittelbehälter 110 zwei nebeneinander angeordnete, im Wesentlichen zylindrische Segmente aufweist zur Bildung einer ersten Kammer 230, die sich entlang einer ersten Kammerachse AK1 erstreckt, und einer zweiten Kammer 240, die sich entlang einer, parallel zur ersten Kammerachse AK1 verlaufenden, zweiten Kammerachse AK2 erstreckt.

Die erste Kammerachse AK1 und die zweite Kammerachse AK2 verlaufen parallel zu einer Längserstreckung LE des Lufttrocknergehäuses 104 und der Lufttrockneranordnung 100. Die erste Kammer 230 und die zweite Kammer 240 sind über einen Steg 220 voneinander getrennt, wobei der Trockenmittelbehälter 110 jedoch mindestens eine Öffnung 225 im Steg 220 aufweist, um die erste Kammer 230 und die zweite Kammer 240 pneumatisch zu verbinden. Der Druckbehälter 110 und insbesondere die erste Kammer 230 und die zweite Kammer 240 sind ausgebildet zur Aufnahme eines granularen und/oder losen Trockenmittels 300. Der das Trockenmittel 300 aufnehmende Teil des Druckbehälters 110 wird auch als Trockenmittelbett bezeichnet. Mittels eines Trockenmittels 300 kann vorteilhaft einer Druckluftströmung DL, die dieses Trockenmittels 300 durchströmt, Feuchtigkeit entzogen werden.

Das Lufttrocknergehäuse 104 weist eine Anschlusseinrichtung 140 in Form eines Anschlussflansches 141 auf, der an einer offenen Stirnseite des Trockenmittelbehälters 110 druckdicht mit dem Trockenmittelbehälter 110 verbindbar ist. Hierzu kann eine trockenmittelseitige Behälterseite 145 der Anschlusseinrichtung 140 mit der offenen Stirnseite des Trockenmittelbehälters 110 verbunden werden. Zwischen der Anschlusseinrichtung 140 und dem Trockenmittelbehälter 110 kann - trockenmittelseitig auf der Anschlusseinrichtung 140 - vorteilhaft eine Gehäusedichtung 192 für eine verbesserte Abdichtung angeordnet sein. Die Öffnung 225, insbesondere die erste Öffnung 225.1 und die zweite Öffnung 225.2 sind - in Richtung der Längserstreckung LE betrachtet - bevorzugt gegenüberliegend von der Seite der Anschlusseinrichtung 140 im Steg 220 angeordnet, um eine möglichst vollständige Durchströmung des Trockenmittels 300 zu ermöglichen.

In der ersten Kammer 230 und der zweiten Kammer 240 ist jeweils eine durchströmbare Rückhalteplatte 139 angeordnet, welche jeweils über eine Vorspannfeder 138 gegen das Trockenmittel 300 gedrückt wird. In der ersten Kammer 230 ist eine erste Rückhalteplatte 139.1 angeordnet, die von einer ersten Vorspannfeder 138.1 gegen das Trockenmittel 300 gedrückt wird. In der zweiten Kammer 240 ist eine zweite Rückhalteplatte 139.2 angeordnet, die von einer zweiten Vorspannfeder 138.2 gegen das Trockenmittel 300 gedrückt wird. Somit wird sowohl das in der ersten Kammer 230 als auch das in der zweiten Kammer 240 befindliche Trockenmittel 300 unter einer Vorspannung gehalten. Zur Gewährleistung einer Durchströmbarkeit ist die Rückhalteplatte 139, 139.1, 139.2 bevorzugt mit Löchern, insbesondere Bohrungen, versehen.

Das Lufttrocknergehäuse 104 weist gemäß dem Konzept der Erfindung eine Entlüftungsventileinheit 120 auf, die innerhalb des Trockenmittelbehälters 110, nämlich innerhalb der zweiten Kammer 240 angeordnet ist. Im Vergleich zur ersten Kammer 230 weist die zweite Kammer 240 eine geringere Menge, insbesondere ungefähr die halbe Menge, an Trockenmittel 300 auf, weil ein Teil des Raumes der zweiten Kammer 240 für die Aufnahme der Entlüftungsventileinheit 120 benötigt wird.

Die Entlüftungsventileinheit 120 weist einen Ventilkörper 122 auf, welcher einstückig mit der Anschlusseinrichtung 140 verbunden ist. Der Ventilkörper 122 und die Anschlusseinrichtung 140 sind somit als ein integrales Bauteil, insbesondere als ein Kunststoffspritzgussbauteil, gebildet. Der Ventilkörper 122 weist eine im Wesentlichen zylindrische Außenfläche 123 auf derart, dass der Ventilkörper 122 vollständig innerhalb des Trockenmittelbehälters 110 aufgenommen werden kann und zwischen der Außenfläche 123 und dem Trockenmittelbehälter 110 an mindestens einer Stelle eine Druckluftströmung DL den Ventilkörper 122 in Richtung der Längserstreckung LE passieren kann, und zwar zwischen der Seite des Trockenmittels 300 und einem in der Anschlusseinrichtung 140 angeordneten pneumatischen Anschluss, insbesondere einem Pneumatikanschluss 12 und/oder einem Regenerationsanschluss 14. Insbesondere ist zwischen der Außenfläche 123 und dem Trockenmittelbehälter 110 ein annähernd hohlzylindrisch ausgebildeter Strömungsspalt 164 gebildet. Auch kann der Bereich zwischen der Außenfläche 123 und dem Trockenmittelbehälter 110, insbesondere der Strömungsspalt 164, zur teilweisen oder vollständigen Unterbringung mindestens einer Montageklammer 160 genutzt werden. Die Entlüftungsventileinheit 120 ist vorliegend als pneumatisches Relaisventil 121 ausgebildet.

Der Ventilkörper 122 weist einen Ventilinnenraum 125 mit mindestens zwei hohlzylindrischen Segmenten mit unterschiedlichen Durchmessern, die in Richtung der Ventilachse AV nebeneinander angeordnet sind, vorliegend einem Relaissegment 142 mit einem Relais-Durchmesser DR und einem sich daran in Richtung der Anschlusseinrichtung 140 anschließendem Schaltsegment 144 mit einem Schalt-Durchmesser DS.

Innerhalb des Behälterinnenraums 125 ist ein Ventilkolben 124 in Richtung der Ventilachse AV axial verschiebbar aufgenommen. Der Ventilkolben 124 ist stufenzylindrisch ausgebildet, und zwar korrespondierend zu dem Ventilinnenraum 125 mit dem Relaissegment 142 und dem Schaltsegment 144. Entsprechend weist der Ventilkolben 124 ein Kolben-Relaissegment 146 auf, dessen Außendurchmesser zu dem Relais-Durchmesser DR korrespondiert, insbesondere geringfügig kleiner ist, um eine Axialbewegung BA des Ventilkolbens 124 zu ermöglichen. Das Kolben-Relaissegment 146 weist auf seiner radialen Außenseite insbesondere eine Relais-Dichtung 150 auf, die als umlaufender Dichtring zwischen dem Kolben-Relaissegment 146 und dem Relaissegment 142 gebildet ist.

Durch den druckdichten Kontakt zwischen dem Relaissegment 142 und dem Kolben-Relaissegment 146 entsteht auf der der Anschlusseinrichtung 140 zugewandten Seite des Behälterinnenraums 125 eine Relaiskammer 154, welche pneumatisch mit einem auf der Anschlusseinrichtung 140 angeordneten Regenerationsanschluss 14 verbunden ist (siehe hierzu auch Fig. 1D).

Der Ventilkolben 124 weist ein in Richtung der Anschlusseinrichtung 140 angeordnetes Kolben-Schaltsegment 148 auf, dessen Außendurchmesser zu dem Schalt-Durchmesser DS korrespondiert, insbesondere geringfügig kleiner ist, um eine Axialbewegung BA des Ventilkolbens 124 zu ermöglichen. Das Kolben-Schaltsegment 148 weist auf seiner radialen Außenseite insbesondere eine Schalt-Dichtung 152 auf, die als umlaufender Dichtring zwischen dem Kolben-Schaltsegment 148 und dem Schaltsegment 144 gebildet ist.

Durch den druckdichten Kontakt zwischen dem Schaltsegment 144 und dem Kolben-Schaltsegment 148 wird im Schaltsegment 144 eine Schaltkammer 156 gebildet. Das Kolben-Schaltsegment 148 weist auf seiner der Anschlusseinrichtung 140 zugewandten Stirnseite eine Schaltfläche AS auf, welche - in der hier dargestellten Förderstellung 120A der Entlüftungsventileinheit 120 - druckdicht gegen einen im Ventilkörper 122 angeordneten Entlüftungsventilsitz 128 anliegt und diesen verschließt. Auf der Schaltfläche AS kann insbesondere ein Dämpferkissen 170 angeordnet sein, welches vorteilhaft aus einem weichen Material, beispielsweise einem Elastomer, gebildet ist und dazu dienen kann, bei einer Axialbewegung BA des Ventilkörpers 124 zurück in die Förderstellung 120A einen Impuls und insbesondere eine Geräuschemission vorteilhaft zu reduzieren. Bei einer Axialbewegung BA des Ventilkörpers 124 von der Anschlusseinrichtung 140 weg hebt sich die Schaltfläche AS von dem Entlüftungsventilsitz 128, wodurch die Schaltkammer 156 mit einer Druckluftströmung DL durchströmt werden kann und insbesondere ein zum Verdichteranschluss 11 führender Verbindungskanal 158 pneumatisch mit dem Entlüftungsanschluss 13 verbunden wird. Der Verbindungskanal 158 ist vorteilhaft in die Anschlusseinrichtung 140, insbesondere in den Anschlussflansch 140, eingeformt.

Auf seiner der Anschlusseinrichtung 140 abgewandten Stirnseite des Ventilkörpers 122 weist die Entlüftungsventileinheit 120 eine luftundurchlässige Abdeckmembran 130, insbesondere in Form eines Gehäusedeckels, auf, welche den Ventilinnenraum 125, insbesondere hermetisch, verschließt. Die Abdeckmembran 130 ist insbesondere als dünnwandiges, rotationssymmetrisches Bauteil gebildet. Die Abdeckmembran 130 wird vorliegend über zwei Montageklammern 160 formschlüssig auf dem Ventilkörper 122 gehalten. Zwischen dem Ventilkörper 122 und der Abdeckmembran 130 ist vorteilhaft eine ringförmige Membrandichtung 132, insbesondere in Form eines Dichtrings, angeordnet.

Die - den Ventilkörper 122 und Montageklammern 160 aufweisende Entlüftungsventileinheit 120 - weist insbesondere einen Ventilkörperdurchmesser DV auf, der insbesondere kleiner, bevorzugt geringfügig kleiner, als ein innerer Trockenmittelbehälterdurchmesser DT des Behälterinnenraums 215 des Trockenmittelbehälters 110, insbesondere der ersten Kammer 230 und/oder der zweiten Kammer 240, ist. Insbesondere ist der Ventilkörperdurchmesser DV derart kleiner als der Trockenmittelbehälterdurchmesser DT, sodass ein resultierender Strömungsspalt 164 einen für eine benötigte Druckluftströmung DL geeigneten Querschnitt aufweist. Insbesondere ist der Ventilkörperdurchmesser DV derart kleiner als der Trockenmittelbehälterdurchmesser DT, dass ein Querschnitt resultiert, der einer Nennweite zwischen 2,4 mm und 4 mm entspricht.

Auf der dem Ventilinnenraum 125 zugewandten Seite weist die Abdeckmembran 130 eine Rückstellfederaufnahme 134 zur Aufnahme einer Rückstellfeder 126 auf. Die Rückstellfeder 126 wird somit zwischen der Rückstellfederaufnahme 134 und dem Ventilkolben 124 gehalten und dient der Beaufschlagung des axial beweglichen Ventilkörpers 124 mit einer Rückstellkraft FR. Die Rückstellkraft FR ist insbesondere abhängig von der - durch die Axialbewegung BA resultierende - Auslenkung des Ventilkolbens 124 und eine Rückstellfederkonstante FRK der Rückstellfeder 126.

Auf der dem Ventilinnenraum 125 abgewandten Seite weist die Abdeckmembran 130 eine Vorspannfederaufnahme 136 auf, hier eine zweite Vorspannfederaufnahme 136.2 zur Aufnahme der zweiten Vorspannfeder 138.2 der zweiten Kammer 240. Die zweite Vorspannfeder 138.2 der zweiten Kammer 240 ist somit zwischen der zweiten Vorspannfederaufnahme 136.2 und der zweiten Rückhalteplatte 139.2 angeordnet zum Beaufschlagen der zweiten Rückhalteplatte 139.2 mit einer Vorspannkraft FV. Die zweite Vorspannfederaufnahme 136.2 und die Rückstellfederaufnahme 134 sind in radial unterschiedlichen Zonen angeordnet, wodurch sie in vorteilhaft platzsparende Weise axial überlappend angeordnet werden können.

Zwischen dem Ventilkolben 124 und der Abdeckmembran 130 kann eine Dämpfscheibe 172 angeordnet sein zum vorteilhaft geräuschmindernden Dämpfen der Axialbewegung BA des Ventilkörpers 124 bei Erreichen einer Endstellung, insbesondere einer Regenerationsstellung 120B.

Die Anschlusseinrichtung 140, insbesondere der Anschlussflansch 141, weist einen ersten Anschlussstutzen 143.1 und einen zweiten Anschlussstutzen 143.2 auf, wobei der erste Anschlussstutzen 143.1 einen Verdichteranschluss 11 und eine erste Vorspannfederaufnahme 136.1 aufweist und der zweite Anschlussstutzen 143.2 durch den Ventilkörper 122 gebildet ist.

Im Folgenden wird die Funktionsweise der Lufttrockneranordnung 100 und insbesondere der Entlüftungsventileinheit 120 mit zusätzlichem Verweis auf die Fig. 1B und Fig. 1C näher beschrieben. In der hier gezeigten Förderstellung 120A der Entlüftungsventileinheit 120 wird an dem Verdichteranschluss 11 eine Druckluftströmung DL , insbesondere von einem hier nicht dargestellten Verdichter 21, bereitgestellt, welche in einer ersten Richtung RR1, hier einer Förderrichtung RF, durch die Rückhalteplatte 139 der ersten Kammer 230, durch das in der ersten Kammer 230 gehaltene Trockenmittel 300, durch die erste und zweite Öffnung 225.1, 225.2, weiter durch das in der zweiten Kammer 240 gehaltene Trockenmittel 300, der Rückhalteplatte 139 der zweiten Kammer 240 und durch den Strömungsspalt 164 vorbei an dem Ventilkörper 122 zu einer Anschlusskammer 162 verläuft, welche in dem Ventilkörper 122 und/oder der Anschlusseinrichtung 140 angeordnet ist und gleichzeitig den Pneumatikanschluss 12 aufweist.

Die Druckluftströmung DL in Förderrichtung RF führt weiterhin an einem Rückschlagventil 52 vorbei, mit einem Rückschlagventilkörper 52.1, welcher sich dazu von einem Rückschlagventilsitz 52.2 abhebt. Das Rückschlagventil 52 stellt sicher, dass keine Druckluftströmung DL in Gegenrichtung vom Pneumatikanschluss 12 zum Trockenmittel 300 strömen kann. Am Pneumatikanschluss 12 wird die vom Trockenmittel 300 getrocknete Druckluftströmung DL, insbesondere für eine hier nicht dargestellte Pneumatikanlage 1002, bereitgestellt.

Wird nun der Regenerationsanschluss 14 mit Druckluft, insbesondere in Höhe eines Abschaltdrucks PA, beaufschlagt, wirkt diese in der - pneumatisch mit dem Regenerationsanschluss 14 verbundenen - Relaiskammer 154 auf eine Relaisfläche AR, welche durch die der Anschlusseinrichtung 140 zugewandte Stirnseite des Kolben-Relaissegments 146 gebildet ist.

Erreicht die am Regenerationsanschluss 14 anliegende Druckluft einen ausreichend hohen Luftdruck, insbesondere einen Abschaltdruck PA, wird die auf den Ventilkolben 124 wirkende Rückstellkraft FR überwunden und der Ventilkolben 124 bewegt sich in einer Axialbewegung BA. Dies hat zur Folge, dass sich die Schaltfläche AS vom Entlüftungsventilsitz 128 abhebt und sich dadurch die Entlüftungsventileinheit 120 in einer Regenerationsstellung 120B befindet.

Das Abheben der Schaltfläche AS vom Entlüftungsventilsitz 128 hat zur Folge, dass der mit dem Verbindungskanal 158 verbundene Verdichteranschluss 11 mit dem Entlüftungsanschluss 13 pneumatisch verbunden wird und somit eine Druckluftströmung DL in einer zweiten Richtung RR2, hier einer Regenerationsrichtung RR, die der Förderrichtung RF - insbesondere im Bereich des Trockenmittels 300 - entgegengerichtet ist, erfolgen kann. Die am Regenerationsanschluss 14 bereitgestellte Druckluftströmung DL strömt hierzu - insbesondere von der Relaiskammer 154 - durch eine Regenerationsdrossel 63 und vorbei an einem in Fig. 1A gestrichelt dargestellten Regenerations-Rückschlagventil 51 und über eine - insbesondere in Fig. 1A sichtbare und in den Ventilkörper 122 und/oder die Anschlusseinrichtung 140 eingeformte - Regenerationspassage 166 in den Strömungsspalt 164. Von dort gelangt die Druckluftströmung DL in den Bereich des Trockenmittels 300 der zweiten Kammer 240, und weiter gemäß der Regenerationsrichtung durch die Öffnungen 225.1, 225.2 und das in der ersten Kammer 230 befindliche Trockenmittel 300 zum Verdichteranschluss 11. Vom Verdichteranschluss 11 und durch den Verbindungskanal 158 kann die Druckluftströmung DL in Regenerationsrichtung RR nun am geöffneten Entlüftungsventilsitz 128 vorbei zum Entlüftungsanschluss 13 strömen. Die Regenerationsdrossel 63 ist insbesondere als Bohrung in der Anschlusseinrichtung 140 gebildet und weist bevorzugt eine Nennweite zwischen 1,2 mm und 2 mm auf.

Eine Anschlusseinrichtung kann ein anderes Anschlusslayout, insbesondere eine abweichende Anzahl an pneumatischen Anschlüssen, aufweisen. Eine derartige Abweichung kann insbesondere bedingt sein durch die verwendete Trocknerschaltung. So kann ein Lufttrocknergehäuse für eine normal entlüftende Trocknerschaltung bzw. Trockneranordnung ein anderes Anschlusslayout aufweisen als ein Lufttrocknergehäuse für eine schnell entlüftende Trocknerschaltung bzw. Trockneranordnung.

Durch das Regenerations-Rückschlagventil 51 wird im Förderbetrieb des Lufttrockners, insbesondere, wenn sich die Entlüftungsventileinheit 120 in ihrer Förderstellung 120A befindet, verhindert, dass Druckluft der Druckluftströmung DL über die Regenerationspassage 166 und den Regenerationsanschluss 14 entweichen kann.

Die durch die Regenerationsdrossel 63 entspannte, in Regenerationsrichtung RR strömende Druckluftströmung DL kann gemäß dem Prinzip der Druckwechseladsorption einen relativ hohen Anteil an Feuchtigkeit aufnehmen und ist somit besonders vorteilhaft geeignet zum Trocknen des Trockenmittels 300. Bei manchen Ausführungsformen im Rahmen der Erfindung ist auch eine Druckluftströmung DL in Regenerationsrichtung RR möglich ohne eine Regeneration des Trockenmittels 300, beispielsweise lediglich zum Entlüften einer Pneumatikanlage 1002.

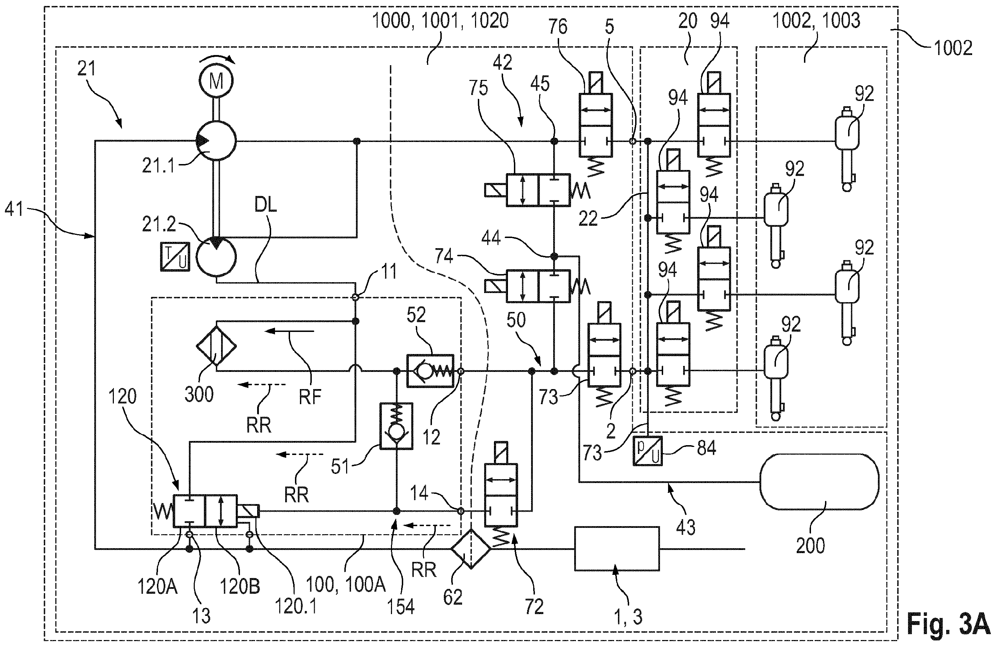

Der Regenerationsanschluss 14 kann in Ausführungsformen direkt pneumatisch mit dem Pneumatikanschluss 12 verbunden sein, sodass, wenn nach einer bestimmten Förderdauer eines Verdichters 21 (hier nicht dargestellt) ein Abschaltdruck PA erreicht wird, automatisch in die Regenerationsstellung 120B geschaltet wird. Alternativ oder zusätzlich kann zwischen dem Regenerationsanschluss 14 und dem Pneumatikanschluss 12 ein Regenerations-Schaltventil 72 (siehe Fig. 3A) angeordnet sein, um, insbesondere mittels in einer Pneumatikanlage und/oder einem Druckspeicher gespeicherter Druckluft, selektiv schaltbar eine Druckluftströmung DL in Regenerationsrichtung RR zur Regeneration des Trockenmittels 300 einzuleiten.

Wenn der am Regenerationsanschluss 14 anliegende Luftdruck unter einen bestimmten Wert, insbesondere unter einen Minimaldruck PMIN fällt, wird der Ventilkolben 124 durch die Rückstellkraft FR zurück auf den Entlüftungsventilsitz 128 gedrückt und die Entlüftungsventileinheit 120 befindet sich wieder in ihrer Förderstellung 120A.

In Fig. 1A ist ausschnittsweise die als Anschlussflansch 141 ausgebildete Anschlusseinrichtung 140 im Bereich der zweiten Kammer in einer Draufsicht auf eine anlagenseitige Anschlussseite 147 der Anschlusseinrichtung 140 dargestellt. Eine gestrichelte Linie zeigt ungefähr die Schnittebene XX der in Fig. 1 dargestellten Schnittzeichnung an.

Fig. 1D zeigt ausschnittsweise einen Querschnitt durch eine Druckluftversorgungsanlage 1001 mit einer in Fig. 1 gezeigten bevorzugten Ausführungsform einer Lufttrockneranordnung 100, in einem Bereich, der einen Verdichter 21 mit einem Zylinder 23 und einen Teil der Lufttrockneranordnung 100 umfasst.

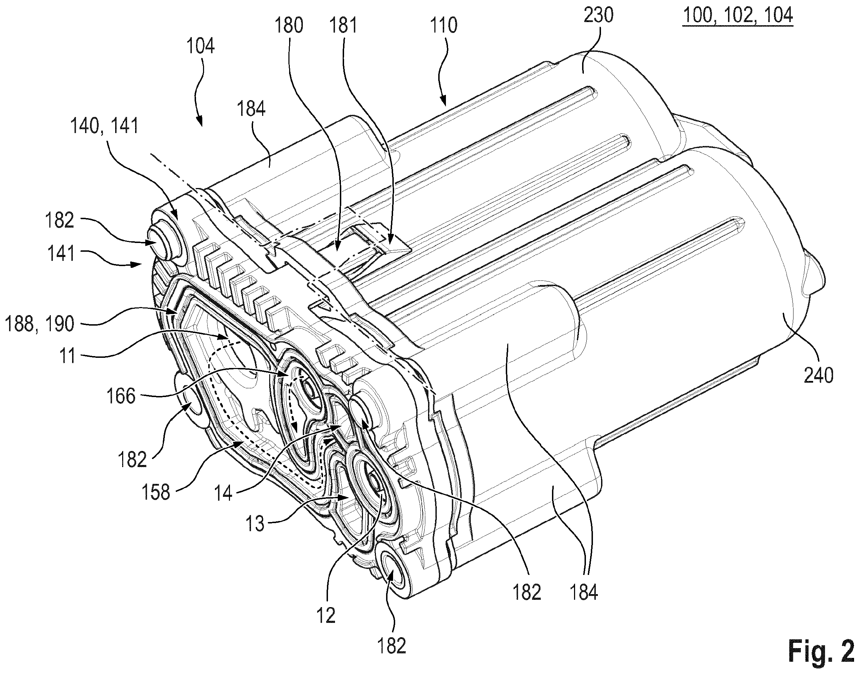

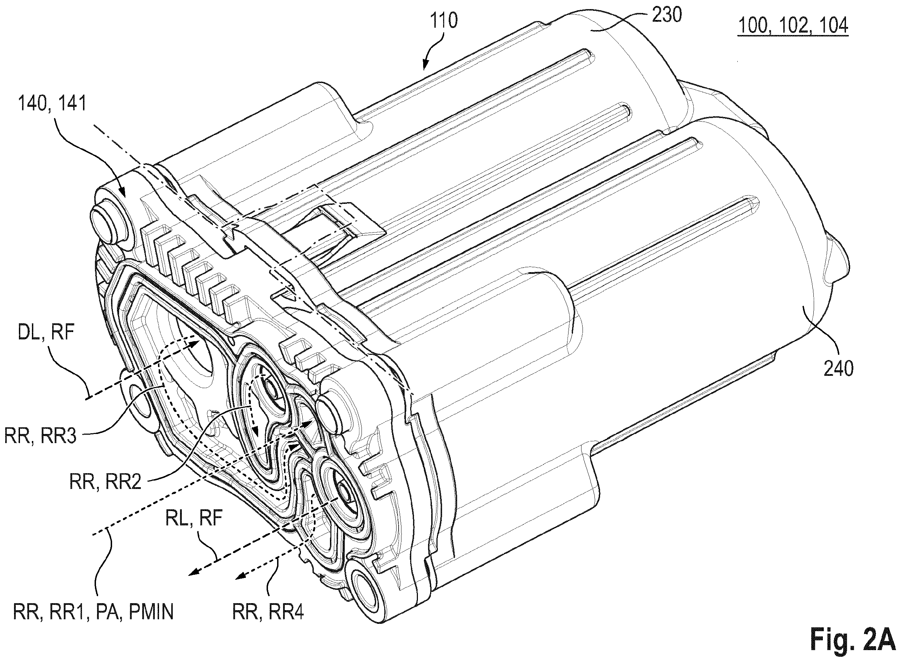

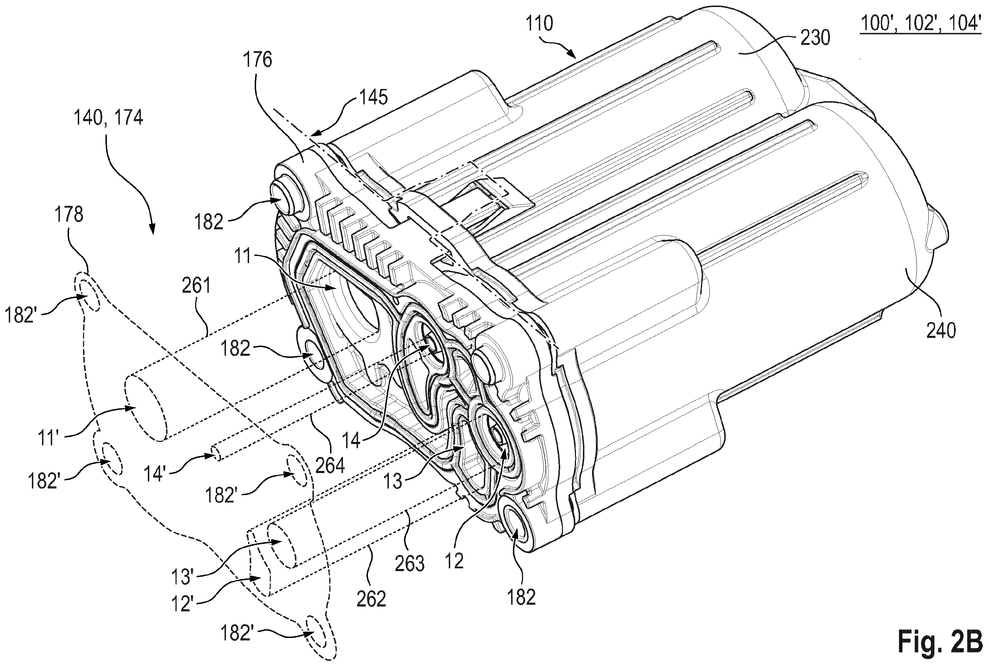

Fig. 2 zeigt die in Fig. 1 dargestellte Ausführungsform eine Lufttrockneranordnung 100 in einer perspektivischen Außenansicht. Die Lufttrockneranordnung 100 ist dabei in einem montierten Zustand dargestellt, bei der der Trockenmittelbehälter 100 mit der Anschlusseinrichtung 140 montiert ist.

Insbesondere kann die Anschlusseinrichtung 140 einen oder mehrere elastische Schnapphaken 180 aufweisen, die in eine korrespondierend dazu auf dem Trockenmittelbehälter 110 angebrachte Rast-Anformungen 181 einrasten können, um die Anschlusseinrichtung 140 dauerhaft, aber lösbar, mit dem Trockenmittelbehälter 110 zu verbinden.

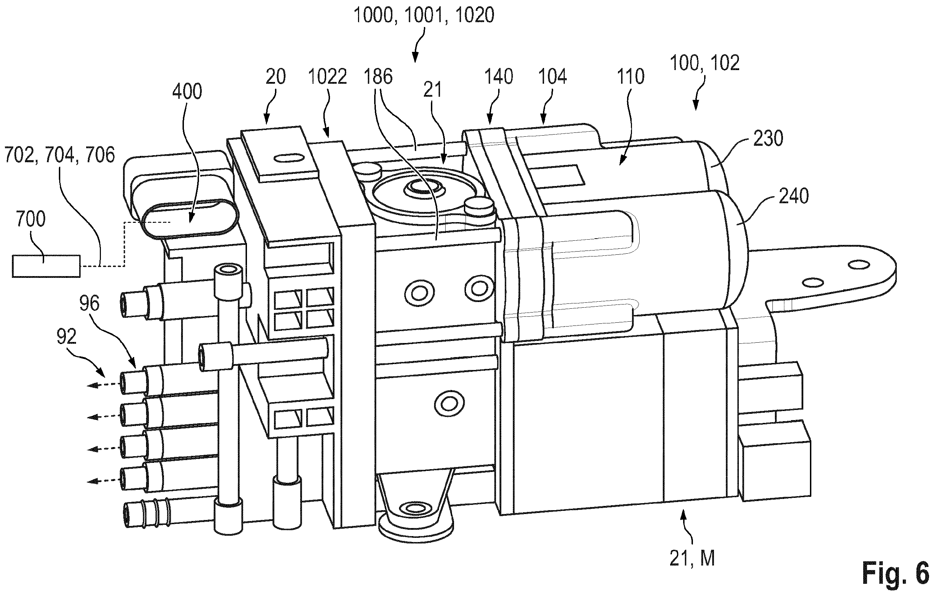

Alternativ oder zusätzlich dazu kann die Anschlusseinrichtung 140 Montagebohrungen 182, und der Trockenmittelbehälter 110 korrespondierend dazu angeordnete Schraubenaufnahmen 184, aufweisen, um die Anschlusseinrichtung 140 mit dem Trockenmittelbehälter 110 mittels Montageschrauben 186 zu verbinden. Vorliegend weist die Anschlusseinrichtung 140 vier Montagebohrungen 182, und der Trockenmittelbehälter 110 entsprechend vier Schraubenaufnahmen 184 auf. Eine oder mehrere Montageschrauben 186 können, wie in Fig. 6 gezeigt, ausgebildet sein, weitere Aggregate, insbesondere einer Druckluftversorgungsanlage 1001, mit der Lufttrockneranordnung 100 zu verbinden.

In der in Fig. 2 dargestellten Ansicht ist eine nach außen gerichtete Anschlussseite 147 der Anschlusseinrichtung 140 sichtbar, die insbesondere zur Montage mit einem hier nicht dargestellten Verdichter 21 und/oder einer Druckluftversorgungsanlage 1001 ausgebildet ist.

Die Anschlusseinrichtung 140 und der hier nicht sichtbare Ventilkörper 122 sind als integrales, insbesondere als ein einstückig in einem Spritzgussverfahren hergestelltes, Bauteil ausgebildet. Insbesondere sind sämtliche pneumatische Anschlüsse, insbesondere der Verdichteranschluss 11, der Pneumatikanschluss 12, der Entlüftungsanschluss 13 und der Regenerationsanschluss 14 als Einformung in der Anschlusseinrichtung 140 ausgebildet. Als Einformung wird ein durch Wegnahme von Material erzeugtes konstruktives Merkmal, insbesondere ein Loch und/oder eine Bohrung und/oder ein Kanal, verstanden.

Weiter kann die Anschlusseinrichtung 140 auf seine Anschlussseite 147 eine oder mehrere Dichtungsaufnahmen 188 zur Aufnahme einer oder mehrerer Anschlussdichtungen 190 aufweisen. Eine Anschlussdichtung 190 wirkt - wenn die Lufttrockneranordnung 100 an ein weiteres Bauteil, insbesondere einen Verdichter 21 und/oder eine Druckluftversorgungsanlage 1001, montiert ist, dichtend gegen dieses Bauteil und ist insbesondere ausgebildet, einen pneumatischen Anschluss 11, 12, 13, 14, Verbindungskanal 158 oder Passage 166, 168 von einem weiteren pneumatischen Anschluss 11, 12, 13, 14, Verbindungskanal 158 oder Passage 166, 168 dichtend zu trennen.

In Fig. 2A sind die Strömungsrichtungen sowohl in der Förderstellung 120A als auch in der Regenerationsstellung 120B der Entlüftungsventileinheit 120 schematisch dargestellt, hierzu wird hinsichtlich der strukturellen Merkmale zusätzlich auf die Fig. 2 verwiesen.

An dem Verdichteranschluss 1, welcher auf die Anschlusseinrichtung 140 im Bereich der ersten Kammer 230 angeordnet ist, kann eine Druckluftströmung DL von einem Verdichter 21 bereitgestellt werden, welche in einer Förderrichtung RF in die erste Kammer 230 strömen kann. Nach dem Durchströmen der bereits in Zusammenhang mit Fig. 1 beschriebenen Lufttrockneranordnung 100 tritt die in Förderrichtung RF strömende Druckluftströmung DL am Pneumatikanschluss 12 aus und wird dort insbesondere für eine Pneumatikanlage 1002 bereitgestellt.

Wird an dem Regenerationsanschluss 14, welcher im Bereich der zweiten Kammer 240 in der Nähe der Entlüftungsventileinheit 120 (hier nicht sichtbar) angeordnet ist, eine Druckluftmenge bzw. eine Druckluftströmung DL bereitgestellt mit einem Luftdruck, insbesondere einem Abschaltdruck PA, der ausreichend hoch ist zum Bewegen des Ventilkolbens 124, wird die Entlüftungsventileinheit 120 in die Regenerationsstellung 120B geschaltet. Die am Regenerationsanschluss 14 anliegende Druckluftströmung DL kann dann in einer Regenerationsrichtung RR über einen ersten Regenerations-Strömungsabschnitt RR1 durch die Relaiskammer 154, die Regenerationsdrossel 63 und das Regeneration-Rückschlagventil 51 (siehe hierzu auch Fig. 1B) weiter durch die Regenerationspassage 166 in einem zweiten Regenerations-Strömungsabschnitt RR2 in die zweite Kammer 240 vorbei an dem Ventilkörper 122, insbesondere durch den Strömungsspalt 164 strömen. Von dort kann die Druckluftströmung DL in Regenerationsrichtung RR - wie in Fig. 1 dargestellt - das Trockenmittel 300 in regenerierender Weise zum Verdichteranschluss 11 durchströmen. Nach dem Austritt am Verdichteranschluss 11 gelangt die Druckluftströmung DL in einem hier dargestellten dritten Regenerations-Strömungsabschnitt RR3 zur hier nicht sichtbaren Schaltkammer 156 vorbei an dem geöffneten Entlüftungsventilsitz 128 zum Entlüftungsanschluss 13. Vom Entlüftungsanschluss 13 gelangt die Druckluftströmung DL über eine Entlüftungspassage 168 in einem vierten Regenerations-Strömungsabschnitt RR4 in eine hier nicht näher dargestellte Entlüftung, insbesondere in eine Umgebung, das heißt einen - eine Lufttrockneranordnung und/oder eine Druckluftversorgungsanlage und/oder ein Fahrzeug umgebenden - Bereich.

Der Verbindungkanal 158, die Regenerationspassage 166 und/oder die Entlüftungspassage 168 sind insbesondere vorteilhaft als Einformungen in der Anschlusseinrichtung 140 gebildet.

Fig. 2B zeigt eine zweite vorteilhafte Ausführungsform eines weiteren Lufttrocknergehäuses 104' mit einer schematisch dargestellten Anschlusseinrichtung 140, die als Anschlussgruppe 174 ausgebildet ist. Die Anschlussgruppe 174 weist einen Trocknerflansch 176 auf, der bevorzugt, zumindest auf der trockenmittelseitigen Behälterseite 145, identisch zu einem Anschlussflansch 140 ausgebildet sein kann zum druckdichten Verschließen des Trockenmittelbehälters 110. Die Anschlussgruppe 174 weist weiter einen Kompressorflansch 178 auf, der hier gestrichelt schematisch dargestellt ist und bevorzugt, zumindest auf der anlagenseitigen Anschlussseite 147, identisch zu einem Anschlussflansch 140 ausgebildet sein kann zum mechanischen und/oder pneumatischen Anschließen des Lufttrocknergehäuses 104' an eine Druckluftversorgung 1000, insbesondere eine Druckluftversorgungsanlage 1001 und oder ein Druckluftversorgungsmodul 1020. Die Anschlussgruppe 174 weist im Trocknerflansch 176 mindestens einen pneumatischen Anschluss 11, 12, 13, 14, vorliegend einen Verdichteranschluss 11, einen Pneumatikanschluss 12, einen Entlüftungsanschluss 13, und einen Regenerationsanschluss 14 auf, wobei jedem pneumatischen Anschluss 11, 12, 13, 14 ein korrespondierender pneumatische Fernanschluss 11', 12', 13', 14' in dem Kompressorflansch 178 zugeordnet ist. Jeder pneumatische Anschluss 11, 12, 13, 14 ist über eine Verbindungsleitung 261, 262, 263, 264 mit dem korrespondierenden pneumatischen Fernanschluss 11', 12', 13', 14' pneumatisch verbunden. Vorliegend ist der Verdichteranschluss 11 über eine erste Verbindungsleitung 261 mit einem Fern-Verdichteranschluss 11' pneumatisch verbunden. Der Pneumatikanschluss 12 ist über eine zweite Verbindungsleitung 262 mit einem Fern-Pneumatikanschluss 12' pneumatisch verbunden. Der Entlüftungsanschluss 13 ist über eine dritte Verbindungsleitung 263 mit einem Fern-Entlüftungsanschluss 13' pneumatisch verbunden. Der Regenerationsanschluss 14 ist über eine vierte Verbindungsleitung 264 mit einem Fern-Regenerationsanschluss 14' pneumatisch verbunden. Eine Verbindungsleitung 261, 262, 263, 264 kann insbesondere als starre Rohrleitung, oder als flexible Leitung, insbesondere Schlauch, ausgebildet sein. Somit kann der Trocknerflansch 176 entweder als ein vom Kompressorflansch 178 getrenntes Bauteil ausgeführt werden oder aber der Trocknerflansch 176 ist direkt und mechanisch mit dem Kompressorflansch 178 verbunden, so dass nicht nur eine pneumatische Verbindung sondern auch eine mechanische Verbindungen zwischen dem Trocknerflansch 176 und dem Kompressorflansch 178 besteht. In diesem zweiten Fall wären dann auch das Lufttrocknergehäuse 140' und die Druckluftversorgung 1000 mechanisch mit einander verbunden. Ansonsten wäre in dem erstgenannten Fall nur eine pneumatische Verbindung zwischen dem Trocknerflansch 176 und dem Kompressorflansch 178 vorhanden und keine mechanische Verbindung.

Fig. 3A zeigt ein pneumatisches Schaltbild eines pneumatischen Systems 1010, aufweisend eine bevorzugte Ausführungsform einer Druckluftversorgung 1000 in Form einer Druckluftversorgungsanlage 1001, zur Versorgung einer Pneumatikanlage 1002 in Form einer Luftfederanlage 1003. Die Druckluftversorgungsanlage 1001 kann insbesondere als Druckluftversorgungseinheit 1020 ausgebildet sein, welche modular aufgebaut ist, jedoch im zusammengebauten Zustand eine bauliche Einheit ergibt, insbesondere wie in Fig. 6 dargestellt.

Über eine Luftzuführung 1, die gleichzeitig auch eine Entlüftung 3 sein kann, wird Luft von einem Verdichter 21 durch einen Luftfilter 62 und eine Zuführungsleitung 41 angesaugt. Der Verdichter 21 ist vorliegend als zweistufiger Verdichter mit einer ersten Verdichterstufe 21.1 und einer zweiten Verdichterstufe 21.2 ausgebildet und wird von einem elektrischen Motor M angetrieben. Gleichwohl können im Rahmen der Erfindung auch andere Verdichterformen, insbesondere ein einstufiger Verdichter, vorgesehen werden.

Die vom Verdichter 21 verdichtete Druckluftströmung DL wird der Lufttrockneranordnung 100 an einem Verdichteranschluss 11 bereitgestellt. Von dort strömt die Druckluftströmung DL - wenn sich die Entlüftungsventileinheit 120 in seiner Förderstellung 120A befindet - in der Förderrichtung RF durch das Trockenmittel 300 vorbei an dem Rückschlagventil 52 zum Pneumatikanschluss 12, an dem es an einer Pneumatikhauptleitung 50 bereitgestellt wird. Die Druckluftströmung DL kann von dort, insbesondere selektiv schaltbar über ein Pneumatikhauptventil 73, an einem Druckluftanschluss 2 der Druckluftversorgungsanlage 1001 für die Pneumatikanlage 1002 bereitgestellt werden. Mittels eines Regenerations-Rückschlagventils 51 wird verhindert, dass die Druckluftströmung DL in Förderrichtung RF in Richtung des Regenerations-Anschlusses 14 entweicht.

Vorliegend ist ein Ventilblock 20 mit vier Balgventilen 94 an den Druckluftanschluss 2 angeschlossen. Mittels eines Balgventils 94 kann jeweils eine Luftfeder 92 der Luftfederanlage 1003 pneumatisch versorgt werden. Der Ventilblock 20 kann bevorzugt als Teil der Druckluftversorgungsanlage 1001 ausgebildet sein.

Die Druckluftversorgungsanlage 1001 weist weiterhin einen Druckspeicher 200 auf, welcher mittels eines Speicherventils 74, welches in einem von der Pneumatikhauptleitung 50 abgehenden Speicherzweig 43 angeordnet ist, selektiv mit der Pneumatikhauptleitung 50 verbunden werden kann. Das Speicherventil 74 ist zwischen der Pneumatikhauptleitung 50 und einem in dem Speicherzweig 43 angeordneten Speicherknoten 44 angeordnet.

Die Druckluftversorgungsanlage 1001 kann optional einen Rückströmungsanschluss 5 aufweisen, über den eine aus der Pneumatikanlage 1002 rückströmende Druckluftströmung, insbesondere aus den Luftfedern 94, wieder aufgenommen werden und als verdichtete oder vorverdichtete Druckluft vorteilhaft genutzt werden kann. Hierzu kann die Druckluftversorgungsanlage 1001 zwischen dem Rückstromanschluss 5 und dem Verdichter 21, insbesondere einem Eingang der zweiten Verdichterstufe 21.2, eine Rückstromleitung 42 aufweisen, über die die wieder aufgenommene, rückströmende Druckluftströmung der zweiten Verdichterstufe 21.2 zwecks Nachverdichtung zugeführt werden kann. In der Rückstromleitung 42 kann ein Rückstromventil 76 angeordnet sein zum selektiven Öffnen und Sperren der Rückstromleitung 42. Ausgehend von einem in der Rückstromleitung 42 angeordneten Abzweigknoten 45 kann eine BoostLeitung 46 mit dem Speicherknoten verbunden sein. In der Boostleitung 46 ist vorteilhaft ein Boost-Ventil 75 angeordnet.

Bei geschlossenem Pneumatikhauptventil 73 und gleichzeitig geöffnetem Speicherventil 74 kann der Druckspeicher 200 mittels der am Pneumatikanschluss 12 bereitgestellten Druckluftströmung DL befüllt, und durch ein anschließendes Schließen des Speicherventils 74 im Druckspeicher 200 gespeichert werden.

Bei geschlossenem Speicherventil 74 und geöffnetem Boost-Ventil 75 sowie gleichzeitig geschlossenem Rückstromventil 76 kann in dem Druckspeicher 200 gespeicherte Druckluft dem Verdichter 21, insbesondere der zweiten Verdichterstufe 21.2, bereitgestellt werden.

Bei Bedarf, insbesondere bei Erreichen eines Abschaltdruckes PA, kann eine Regeneration der Lufttrockneranordnung 100 erfolgen. Der Abschaltdruck PA kann beispielsweise über einen in einer Galerie 22 der Pneumatikanlage 1002 angeordneten Drucksensor 84 gemessen werden.

Durch ein Öffnen des Regenerations-Schaltventils 72 kann eine - aus dem Druckspeicher 200 und/oder einer oder mehrerer Luftfedern 92 stammende und über die Pneumatikhauptleitung 50 bereitgestellte - Druckluftströmung DL am Regenerationsanschluss 14 bereitgestellt werden. Von dem Regenerationsanschluss 14 strömt die Druckluftströmung DL oder ein Teil der Druckluftströmung DL in Regenerationsrichtung RR zum einen Steueranschluss 120.3 der Entlüftungsventileinheit 120, welcher insbesondere durch die in Fig. 1 gezeigte Relaiskammer 154 und die Relaisfläche AR gebildet ist. Durch ein Beaufschlagen der Relaisfläche AR mit einem ausreichend hohen Luftdruck, insbesondere einem Abschaltdruck PA, schaltet die Entlüftungsventileinheit 120 in die Regenerationsstellung 120B.

Über eine von der Relaiskammer 154 abgehende Abzweigung 82 gelangt die Druckluftströmung DL in Regenerationsrichtung RR über die Regenerationsdrossel 63 und das Regeneration-Rückschlagventil 51 zum Trockenmittel 300, wo die von der Regenerationsdrossel 63 entspannte Druckluftströmung DL Feuchtigkeit aus dem Trockenmittel 300 zieht und diese Feuchtigkeit über die geöffnete Entlüftungsventileinheit 120 - insbesondere deren Schaltkammer 156 - zum Entlüftungsanschluss 13 transportiert. Vom Entlüftungsanschluss 13 gelangt die mit Feuchtigkeit angereicherte Druckluftströmung DL zur Entlüftung 3, insbesondere die Umgebung.

Die Balgventile 94, das Regenerations-Schaltventil 72, das Speicherventil 73, das Boost-Ventil 75 sowie das Rückströmventil 76 sind vorliegend als 2/2-Wege-Magnetventile ausgebildet und über hier nicht dargestellte elektrische Steuerleitungen von einem ebenfalls hier nicht dargestellten Steuergerät 700 ansteuerbar.

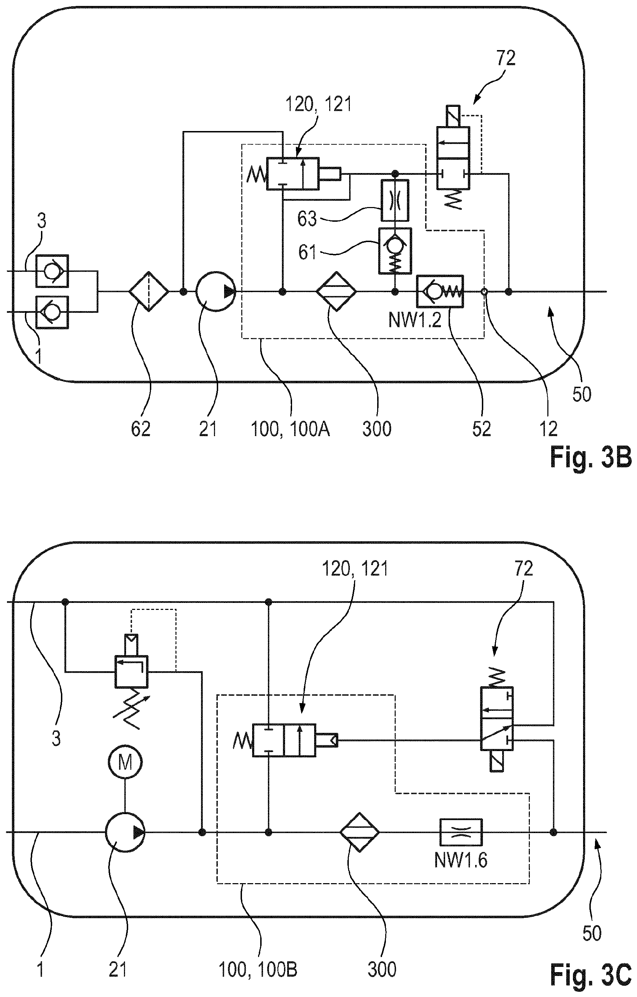

Die vorliegende Lufttrockneranordnung 100 ist als normal entlüftende Lufttrockneranordnung 100A ausgebildet. Gleichwohl sind im Rahmen der Erfindung unterschiedliche Bauformen oder Konfigurationen der Lufttrockneranordnung 100 möglich. Fig. 3B, Fig. 3C zeigen beispielhaft schematisch derartige Bauformen.

Fig. 3B zeigt ebenfalls eine normal entlüftende Lufttrockneranordnung 100A in einer schematisch dargestellten Druckluftversorgungsanlage 1001. Insofern wird auf die Ausführungen zu Fig. 3A verwiesen. Fig. 3C zeigt eine weitere Lufttrockneranordnung 100 gemäß dem Konzept der Erfindung in Form einer schnell entlüftenden Lufttrockneranordnung 100B.

Das Konzept der Erfindung ist unabhängig von der Trocknerschaltung bzw. der Art der Lufttrockneranordnung 100A, 100B umsetzbar. Insbesondere kann unabhängig von der Art der Lufttrockneranordnung 100A, 100B das Konzept einer Anschlusseinrichtung 140 mit einem trockenmittelseitig in den Trockenmittelbehälter 110 hineinragenden Ventilkörper 122 eines pneumatischen Relaisventils 121 zur Bildung einer Entlüftungsventileinheit 120 mit einem Ventilkolben 124 umgesetzt werden. Dies ist insbesondere unabhängig von einer Anzahl von pneumatischen Anschlüssen 11, 12, 13, 14 oder Verbindungskanälen 158 oder Regenerationspassagen 166 oder Entlüftungspassagen 168 oder dergleichen Anschlüssen bzw. Kanäle.

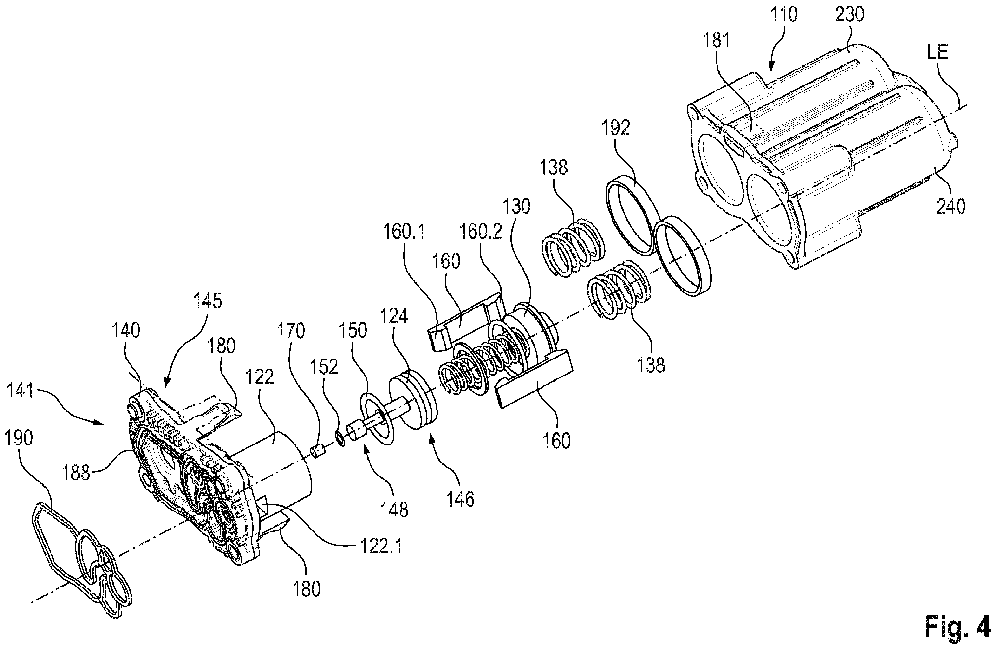

Fig. 4 zeigt in einer Explosionsdarstellung die einzelnen Komponenten des Lufttrocknergehäuses 104 gemäß dem Konzept der Erfindung der bereits in Fig. 1 und Fig. 2 dargestellten Lufttrockneranordnung 100.

Aus der Ansicht wird die einfache Montage der Lufttrockneranordnung 100 und insbesondere der Entlüftungsventileinheit 120 deutlich. Insbesondere werden zur Montage der Entlüftungsventileinheit 120 deren Komponenten lediglich unter in der axial korrekten Reihenfolge in den Ventilkörper 122 eingeführt, und anschließend mittels einer oder mehrerer Montageklammern 160 befestigt. Insbesondere weist jede Montageklammer 160 hierzu eine elastisch auslenkbare Rastnase 160.1 auf, welche in eine korrespondierende Klammeraufnahme 122.1 des Ventilkörpers 122 aufgenommen werden kann. Auf der in Richtung der Längserstreckung LE gegenüberliegenden Seite der Montageklammer 160 weist die Montageklammer 160 bevorzugt einen Haltehaken 160.2 auf, welche ausgebildet ist, die Abdeckmembran 130 - im auf den Ventilkörper 122 aufgesetzten Zustand - haltend zu umgreifen, insbesondere bevor die Rastnase 160.1 in die Klammeraufnahme 142.1 eingerastet wird und die Komponenten der Entlüftungsventileinheit 120 somit fest, aber lösbar, montiert sind. Mit einer Anzahl von zwei Montageklammern 160 kann beispielsweise die Entlüftungsventileinheit 120 besonders einfach und zuverlässig montiert werden.

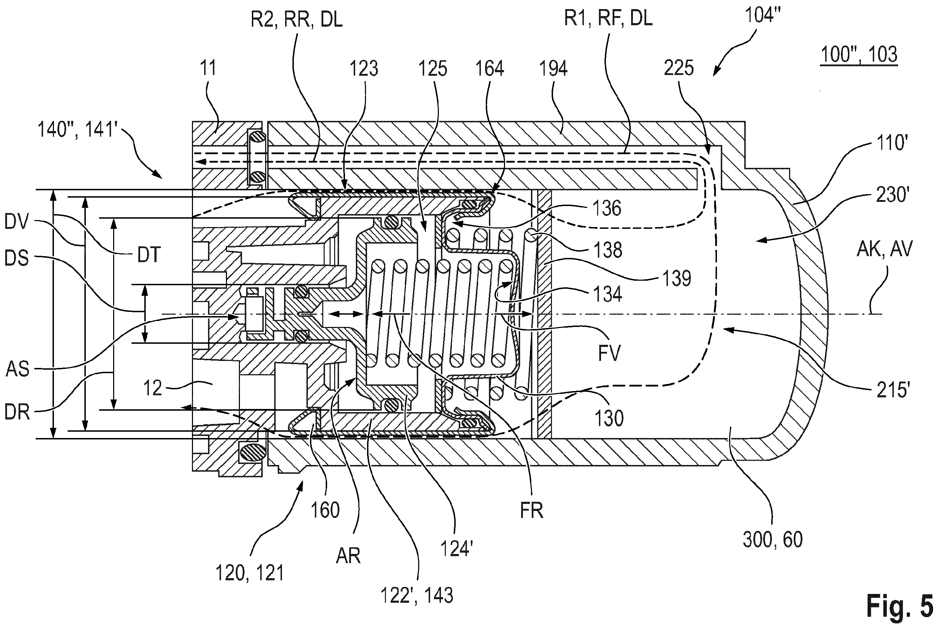

Fig. 5 zeigt eine noch weitere Lufttrockneranordnung 100" mit einem Einzelkammer-Lufttrockner 103, aufweisend ein noch weiteres Lufttrocknergehäuse 104" gemäß einer dritten bevorzugten Ausführungsform entsprechend dem Konzept der Erfindung, mit einem weiteren Trockenmittelbehälter 110', der einen weiteren Behälterinnenraum 215' zur Bildung einer weiteren ersten Kammer 230' umfasst. Die weitere erste Kammer 230' bildet in dieser Ausführungsform die einzige Kammer des Lufttrocknergehäuses 104".

Die noch weitere Lufttrockneranordnung 100" weist eine noch weitere Anschlusseinrichtung 140" auf, die in Form eines weiteren Anschlussflansches 141' gebildet ist. Der weitere Anschlussflansch 141' weist nur einen Anschlussstutzen 143 auf, der einen weiteren Ventilkörper 122' umfasst. Der weitere Ventilkörper 122' bildet mit einem weiteren Ventilkolben 124' eine weitere Entlüftungsventilanordnung 120'. Die Funktionsweise der Entlüftungsventilanordnung 120' ist identisch zu der im Zusammenhang mit der ersten Ausführungsform detailliert beschriebenen Entlüftungsventilanordnung 120. Das noch weitere Lufttrocknergehäuse 104" weist eine schematisch dargestellte Kammeranschlussleitung 194 auf, die die Öffnung 225 mit dem Verdichteranschluss 11 pneumatisch verbindet. In anderen Ausführungsformen kann die Kammeranschlussleitung 194 unterschiedlich gebildet sein, beispielsweise als sich konzentrisch um die Kammerachse AK, außerhalb des weiteren Trockenmittelbehälters 110' erstreckender Ringraum. In einem Einzelkammer-Lufttrockner 103 können die Vorteile des Konzepts der Erfindung ebenso wie bei einem Doppelkammer-Lufttrockner 102, umgesetzt werden.

In Fig. 6 ist eine Druckluftversorgungsanlage 1001 in Form einer Druckluftversorgungseinheit 1020 gezeigt, die ein Lufttrocknergehäuse 104 gemäß dem Konzept der Erfindung für eine Lufttrockneranordnung 100 in Form eines Doppelkammer-Lufttrockner 102 aufweist.

Der Trockenmittelbehälter 110 der Lufttrockneranordnung 100 ist mit der Anschlusseinrichtung 140 zusammengesetzt und mittels Montageschrauben 186 an einer, den Verdichter 21 umfassenden, Tragstruktur 1022 befestigt. Der Verdichter ist insbesondere als Hubkolbenverdichter ausgebildet und wird über einen elektrischen Motor M angetrieben. Ebenfalls ist ein Ventilblock 20 an die Tragstruktur 1022 befestigt, welcher mittels hier nicht sichtbarer Balgventile 94 ausgebildet ist, über Balganschlüsse 96 selektiv Druckluft für einzelne, hier nicht dargestellte Luftfedern 92 bereitzustellen.

Die Druckluftversorgungsanlage 1001 weist vorteilhaft einen Steueranschluss 400 auf, mittels welchem die Druckluftversorgungsanlage 1001 über eine Steuerleitung 702 mit einer ECU bzw. einem Steuergerät 700 signal- und/oder energieführend verbunden werden kann. Insbesondere können über den Steueranschluss 400 die Balgventile 94, das Regenerations-Schaltventil 72, das Speicherventil 73, das Boost-Ventil 75 und/oder das Rückströmventil 76 gesteuert werden, die jeweils vorteilhaft als Magnetventil ausgebildet sind. Auch ist der Motor M des Verdichters 21 bevorzugt über den Steueranschluss 400 ansteuerbar. Die Steuerleitung 702 ist insbesondere als Fahrzeugbusleitung 704, besonders bevorzugt als CAN-Bus-Leitung 706 ausgebildet.

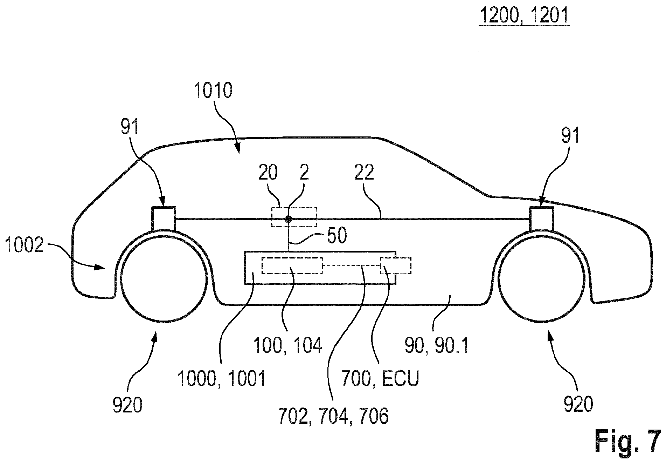

Fig. 7 zeigt eine schematische Darstellung eines Fahrzeugs 1200 --vorliegend in Form eines PKW 1201-- aufweisend ein pneumatisches System 1010 mit einer Druckluftversorgungsanlage 1001 und einer als Luftfederanlage 1003 ausgebildeten Pneumatikanlage 1002. Das hier, ohne Einschränkung der Anwendbarkeit auch für LKWs oder andere Nutzfahrzeuge, beispielhaft dargestellte PKW-Fahrzeug 1200 verfügt über vier Räder 920, von denen hier aufgrund der Schnittdarstellung die zwei einer Fahrzeugseite zugeordneten Räder gezeigt sind. Analog zur Anzahl der Räder verfügt die Luftfederanlage 1003 über vier Luftfedern 92, von denen hier analog zu den Rädern 920 aufgrund der Schnittdarstellung die zwei einer Fahrzeugseite zugeordneten Luftfedern 92 gezeigt sind. Die vier Luftfedern 92, die jeweils den vier Rädern 920 zugeordnet sind, werden als Teil der Luftfederanlage 1003 von der Druckluftversorgungsanlage 1001 mit Druckluft versorgt. Die Druckluftversorgungsanlage 1001 weist eine Lufttrockneranordnung 100 mit einem Lufttrocknergehäuse 104 gemäß dem Konzept der Erfindung auf und ist über eine hier nicht näher gezeigte pneumatische Hauptleitung 5, einen Druckluftanschluss 2, einen Ventilblock 20 und eine Galerie 22 mit den Komponenten der Pneumatikanlage 90, in diesem Falle den vier Luftfedern 92, pneumatisch verbunden. Die Druckluftversorgungsanlage 1001 und/oder das Fahrzeug 1200 weist weiter ein Steuergerät 700 in Form einer Electronic Control Unit (ECU), welche zum Ansteuern der in der Druckluftversorgungsanlage 1001 vorhandenen Komponenten ausgebildet ist. Ebenfalls kann das Steuergerät 700 weitere Komponenten des pneumatischen Systems 1010 ansteuern, insbesondere Ventile des Ventilblocks 20.

### BEZUGSZEICHENLISTE (Teil der Beschreibung)

- 1: Luftzuführung
- 2: Druckluftanschluss
- 3: Entlüftung
- 5: Rückstromanschluss
- 11: Verdichteranschluss
- 12: Pneumatikanschluss
- 13: Entlüftungsanschluss
- 14: Regenerationsanschluss
- 11': Fern-Verdichteranschluss
- 12': Fern-Pneumatikanschluss
- 13': Fern-Entlüftungsanschluss
- 14': Fern-Regenerationsanschluss
- 20: Ventilblock
- 21: Verdichter
- 22: Galerie
- 23: Zylinder des Verdichters
- 41: Zuführungsleitung
- 42: Rückströmleitung
- 43: Speicherzweig
- 44: Speicherknoten
- 45: Abzweigknoten
- 50: Pneumatikhauptleitung
- 51: Regenerations-Rückschlagventil
- 52: Rückschlagventil
- 52.1: Rückschlagventilkörper
- 52.2: Rückschlagventilsitz
- 62: Luftfilter
- 63: Regenerationsdrossel
- 72: Regenerations-Schaltventil
- 73: Pneumatikhauptventil
- 74: Speicherventil
- 75: Boost-Ventil
- 76: Rückstromventil
- 82: Abzweigung
- 84: Drucksensor
- 92: Luftfeder
- 94: Balgventil
- 96: Balganschluss

- 100: Lufttrockneranordnung
- 100A: normal entlüftende Lufttrockneranordnung
- 100B: schnell entlüftende Lufttrockneranordnung
- 102: Doppelkammer-Lufttrockner
- 103: Einzelkammer-Lufttrockner
- 104: Lufttrocknergehäuse
- 110: Trockenmittelbehälter
- 120: Entlüftungsventileinheit
- 121: Relaisventil, pneumatisches Relaisventil
- 120A: Förderstellung der Entlüftungsventileinheit
- 120B: Regenerationsstellung der Entlüftungsventileinheit
- 122: Ventilkörper
- 122.1: Klammeraufnahme des Ventilkörpers
- 123: Außenfläche des Ventilkörpers
- 124: Ventilkolben
- 125: Ventilinnenraum
- 126: Rückstellfeder
- 128: Entlüftungsventilsitz des Ventilkörpers
- 130: Abdeckmembran
- 132: Membrandichtung
- 134: Rückstellfederaufnahme
- 136: Vorspannfederaufnahme
- 136.1, 136.2: erste, zweite Vorspannfederaufnahme
- 138: Vorspannfeder
- 138.1, 138.2: erste, zweite Vorspannfeder
- 139: Rückhalteplatte
- 139.1, 139.2: erste, zweite Rückhalteplatte
- 140: Anschlusseinrichtung
- 141: Anschlussflansch
- 142: Relaissegment
- 143: Anschlussstutzen
- 143.1, 143.2: erster, zweiter Anschlussstutzen
- 144: Schaltsegment
- 145: trockenmittelseitige Behälterseite der Anschlusseinrichtung
- 146: Kolben-Relaissegment
- 147: Anschlussseite der Anschlusseinrichtung
- 148: Kolben-Schaltsegment
- 149: Anschlussflanschsegment
- 150: Relais-Dichtung
- 152: Schalt-Dichtung
- 154: Relaiskammer
- 156: Schaltkammer
- 158: Verbindungskanal
- 160: Montageklammer
- 160.1: Rastnase der Montageklammer
- 160.2: Haltehaken der Montageklammer
- 162: Anschlusskammer
- 164: Strömungsspalt
- 166: Regenerationspassage
- 168: Entlüftungspassage
- 170: Dämpfkissen
- 172: Dämpfscheibe
- 174: Anschlussgruppe
- 176: Trocknerflansch
- 178: Kompressorflansch
- 180: Schnapphaken
- 181: Rast-Anformung
- 182: Montagebohrung
- 184: Schraubenaufnahme
- 186: Montageschraube
- 188: Dichtungsaufnahme
- 190: Anschlussdichtung
- 192: Gehäusedichtung
- 194: Kammeranschlussleitung
- 200: Druckspeicher
- 215: Behälterinnenraum
- 220: Steg
- 225: Öffnung im Steg
- 225.1, 225.2: erste, zweite Öffnung im Steg
- 230: erste Kammer
- 240: zweite Kammer
- 261: erste Verbindungsleitung
- 262: zweite Verbindungsleitung
- 263: dritte Verbindungsleitung
- 264: vierte Verbindungsleitung
- 300: Trockenmittel
- 400: Steueranschluss
- 700: Steuergerät / ECU
- 702: Steuerleitung
- 704: Fahrzeugbusleitung
- 706: CAN-Bus-Leitung
- 920: Rad
- 1000: Druckluftversorgung
- 1001: Druckluftversorgungsanlage
- 1002: Pneumatikanlage
- 1003: Luftfederanlage
- 1010: pneumatisches System
- 1020: Druckluftversorgungseinheit
- 1022: Tragstruktur der Druckluftversorgungseinheit
- 1200: Fahrzeug
- 1201: PKW
- AK1, AK2: erste, zweite Kammerachse
- AR: Relaisfläche des Ventilkolbens
- AS: Schaltfläche des Ventilkolbens
- AV: Ventilachse
- BA: Axialbewegung
- DL: Druckluftströmung
- DR: Relais-Durchmesser
- DS: Schalt-Durchmesser
- DT: innerer Trockenmittelbehälterdurchmesser
- DV: Ventilkörperdurchmesser
- FR: Rückstellkraft
- FRK: Rückstellfederkonstante
- FV: Vorspannkraft
- LE: Längserstreckung des Trockenmittelbehälters
- M: Motor
- PA: Abschaltdruck
- PMIN: Minimaldruck
- RF: Förderrichtung
- RR: Regenerationsrichtung
- RR1-4: erster bis vierter Regenerations-Strömungsabschnitt
- XX: Schnittebene

## Patentansprüche

1. Lufttrocknergehäuse (104) aufweisend einen Trockenmittelbehälter (110) zur Befüllung mit Trockenmittel (300) und eine Anschlusseinrichtung (140), insbesondere einen Anschlussflansch (141), für eine Druckluftversorgung (1000) mit einer Druckluftströmung (DL), wobei die Anschlusseinrichtung (140) zum Anschluss des Lufttrocknergehäuses (104) an die Druckluftversorgung ausgebildet ist, wobei
- die Anschlusseinrichtung (140) auf einer trockenmittelseitigen Behälterseite (145) druckdicht mit dem Trockenmittelbehälter (110) verbindbar ist, wobei
- die Anschlusseinrichtung (140) trockenmittelseitig einen in den Trockenmittelbehälter (110) hineinragenden Ventilkörper (122) aufweist, in dem ein Ventilkolben (124) bewegbar ist, und
- der Ventilkörper (122) und der Ventilkolben (124) eine Entlüftungsventileinheit (120) bilden, die als pneumatisches Relaisventil (121) ausgebildet ist,
- die Anschlusseinrichtung (140) an einer anlagenseitigen Anschlussseite (147) mit der Druckluftversorgungsanlage (1001) verbindbar ausgebildet ist, und
- der Trockenmittelbehälter (110) von einer Druckluftströmung (DL) in einer ersten Stellung, (120A), des Ventilkolbens (124) in einer ersten Richtung (R1), und in einer zweiten Stellung, (120B), des Ventilkolbens (124) in einer zweiten Richtung (R2) durchströmbar ist, **dadurch gekennzeichnet, dass**
- die Anschlusseinrichtung (140) den Ventilkörper (122) einstückig ausbildet, und/oder
- der Ventilkörper (122) und die Entlüftungsventileinheit (120), vollständig in den Trockenmittelbehälter (110) hineinragt und/oder vollständig innerhalb des Trockenmittelbehälters (110) angeordnet ist.

2. Lufttrocknergehäuse (104) nach Anspruch 1, **dadurch gekennzeichnet, dass** das Lufttrocknergehäuse (104) für einen Doppelkammer-Lufttrockner (102) ausgebildet ist, wobei der Trockenmittelbehälter (110) einen Behälterinnenraum (215) aufweist, der in eine erste Kammer (230) und eine zweite Kammer (240) geteilt ist, insbesondere mittels eines sich entlang einer Längserstreckung (LE) des Trockenmittelbehälters (110) erstreckenden Steges (220), , wobei
- die erste Kammer (230) und die zweite Kammer (240), insbesondere über wenigstens eine Öffnung (225) im Steg, pneumatisch verbunden sind.

3. Lufttrocknergehäuse (104) nach Anspruch 2, **dadurch gekennzeichnet**, dass-
die Anschlusseinrichtung (140) einen ersten Anschlussstutzen (143.1) und einen zweiten Anschlussstutzen (143.2) aufweist, wobei der erste Anschlussstutzen (143.1) insbesondere eine erste Vorspannfederaufnahme (136.1) aufweist, und der zweite Anschlussstutzen (143.2) durch den Ventilkörper (122) gebildet ist.

4. Lufttrocknergehäuse (104) nach einem der vorherigen Ansprüche, **dadurch gekennzeichnet, dass** die Anschlusseinrichtung (140), insbesondere der Anschlussflansch (141), mindestens einen pneumatischen Anschluss (11, 12, 13, 14), insbesondere ein Verdichteranschluss (11), ein Pneumatikanschluss (12), ein Entlüftungsanschluss (13) und/oder ein Regenerationsanschluss (14), aufweist, wobei
- der mindestens eine pneumatische Anschluss (11, 12, 13, 14) als Einformung, insbesondere als mindestens ein Kanal und/oder mindestens eine Bohrung, in der Anschlusseinrichtung (140), bevorzugt auf einer Anschlussseite (147), ausgebildet ist.

5. Lufttrocknergehäuse (104) nach einem der vorherigen Ansprüche, **dadurch gekennzeichnet, dass** die Anschlusseinrichtung (140) als Anschlussflansch (141) ausgebildet ist, oder
- die Anschlusseinrichtung (140) als Anschlussgruppe (174) ausgebildet ist mit einem Trocknerflansch (176) und einem Kompressorflansch (178), insbesondere wobei
- mindestens einem pneumatischen Anschluss (11, 12, 13, 14) in dem Trocknerflansch (176) ein korrespondierender pneumatischer Fernanschluss (11', 12', 13', 14') in dem Kompressorflansch (178) zugeordnet ist und jeder pneumatische Anschluss (11, 12, 13, 14) jeweils mit dem korrespondierenden pneumatischen Fernanschluss (11', 12', 13', 14'), insbesondere über eine Verbindungsleitung (261, 262, 263, 264), pneumatisch verbunden ist.

6. Lufttrocknergehäuse (104) nach einem der vorherigen Ansprüche, **dadurch gekennzeichnet, dass** der Ventilkörper (122) einen Ventilkörperdurchmesser (DV) aufweist, der geringer ist als ein Trockenmittelbehälterdurchmesser (DT) des Trockenmittelbehälters (110), sodass in einem radialen Zwischenraum zwischen dem Ventilkörper (122) und dem Trockenmittelbehälter (110) ein Strömungsspalt (164) gebildet wird zum Führen der Druckluftströmung (DL) vorbei an dem Ventilkörper (122).

7. Lufttrocknergehäuse (104) nach einem der vorherigen Ansprüche, **dadurch gekennzeichnet, dass**
- der Ventilkolben (124) eine Relaisfläche (AR) und eine Schaltfläche (AS) aufweist, wobei die Relaisfläche (AR) größer ist als die Schaltfläche (AS), insbesondere der Ventilkolben (124) stufenzylindrisch ausgebildet ist, und
- die Relaisfläche (AR) über den Regenerationsanschluss (14) mit Druckluft (DL) beaufschlagbar ist zum Bewegen des Ventilkolbens (124) in die Regenerationsstellung (120B), in der sich die Schaltfläche (AS) von einem Entlüftungsventilsitz (128) des Ventilkörpers (122) abhebt.

8. Lufttrocknergehäuse (104) nach einem der vorherigen Ansprüche, **dadurch gekennzeichnet, dass**
- der Ventilkörper (122) eine Abdeckmembran (130) aufweist, die, insbesondere druckdicht, auf dem Ventilkörper (122) befestigt ist zur Bildung eines Ventilinnenraums (125), wobei
- die Abdeckmembran (130) eine auf der dem Ventilinnenraum (125) zugewandten Seite eine Rückstellfederaufnahme (134) zur Aufnahme der Rückstellfeder (126) aufweist, und/oder
- auf der dem Ventilinnenraum (125) abgewandten Seite eine Vorspannfederaufnahme (136) zur Aufnahme einer Vorspannfeder (138, 138.1, 138.2), insbesondere eine zweite Vorspannfederaufnahme (136.2) zur Aufnahme einer zweiten Vorspannfeder (138.2), aufweist, wobei die Vorspannfeder (138, 138.1, 138.2) ausgebildet ist zum Beaufschlagen des Trockenmittels (300) mit einer Vorspannkraft (FV).

9. Lufttrocknergehäuse (104) nach einem der vorherigen Ansprüche, **gekennzeichnet durch** ein, zwischen dem Entlüftungsventilsitz (128) und der Schaltfläche (AS) angeordnetes, insbesondere aus einem Elastomer gebildetes, Dämpfkissen (170), und/oder
- **durch** eine zwischen dem Ventilkolben (124) und der Abdeckmembran (130) angeordnete, insbesondere aus einem Elastomer gebildete, Dämpfscheibe (172).

10. Lufttrocknergehäuse (104) nach einem der vorherigen Ansprüche, **gekennzeichnet durch** ein, insbesondere als 2/2-Wege-Magnetventil ausgebildetes, Regenerations-Schaltventil (72), wobei das Regenerations-Schaltventil (72) ausgebildet ist zum selektiven Herstellen einer pneumatischen Verbindung zwischen einer Pneumatikhauptleitung (50) und dem Regenerationsanschluss (14).

11. Lufttrockneranordnung (100), die aufweist:
- ein Lufttrocknergehäuse (104) gemäß einem der Ansprüche 1 bis 10 aufweisend einen Trockenmittelbehälter (110) zur Befüllung mit Trockenmittel (300) und eine Anschlusseinrichtung (140), insbesondere einen Anschlussflansch (141), für eine Druckluftversorgung (1000),
- ein Trockenmittel (300), insbesondere wobei das Trockenmittel (300) lose und/oder granular ausgebildet ist, wobei
die Anschlusseinrichtung (140) zum Anschluss des Lufttrocknergehäuses (104) der Lufttrockneranordnung (100) an die Druckluftversorgung (1000) ausgebildet ist, insbesondere die Druckluftversorgung (1000) eine Druckluftversorgungsanlage (1001) zum Betreiben einer Pneumatikanlage (1002) mit einer Druckluftströmung (DL) ist.

12. Druckluftversorgungsanlage (1001) zum Versorgen einer Pneumatikanlage (1002), insbesondere einer Luftfederanlage (1003) eines Fahrzeugs (1200), vorzugsweise eines PKWs (1201), wobei die Druckluftversorgungsanlage (1001) ein Lufttrocknergehäuse (104) nach einem der Ansprüche 1 bis 10 oder eine Lufttrockneranordnung (100) nach Anspruch 11 aufweist.

13. Fahrzeug (1200) mit einer Pneumatikanlage (1002), insbesondere einer Luftfederanlage (1003), insbesondere PKW (1201), aufweisend ein Lufttrocknergehäuse (104) nach einem der Ansprüche 1 bis 10 oder eine Lufttrockneranordnung (100) nach Anspruch 11 oder eine Druckluftversorgungsanlage (1001) nach Anspruch 12.

## Claims

1. Air dryer housing (104) comprising a drying agent container (110) for filling with drying agent (300) and a connection device (140), in particular a connection flange (141), for a compressed air supply (1000) having a compressed air flow (DL), wherein the connection device (140) is designed to connect the air dryer housing (104) to the compressed air supply, wherein
- the connection device (140) is connectible to the drying agent container (110) on a drying-agent-side container face (145) and in a pressure-sealed manner, wherein
- the connection device (140) has, on the drying agent side, a valve body (122) which projects into the drying agent container (110), in which valve body a valve piston (124) can be moved, and
- the valve body (122) and the valve piston (124) form a venting valve unit (120) which is designed as a pneumatic relay valve (121),
- the connection device (140) is designed to be connectible to the compressed-air supply system (1001) at a system-side connection face (147), and
- a compressed air flow (DL) can flow through the drying agent container (110) in a first position (120A) of the valve piston (124) in a first direction (R1), and in a second position (120B) of the valve piston (124) in a second direction (R2), **characterized in that**
- the connection device (140) forms the valve body (122) in a single piece, and/or
- the valve body (122) and the venting valve unit (120) project completely into the drying agent container (110) and/or are arranged completely within the drying agent container (110).

2. Air dryer housing (104) according to claim 1, **characterized in that** the air dryer housing (104) is designed for a double-chamber air dryer (102), wherein the drying agent container (110) has a container interior (215) which is divided into a first chamber (230) and a second chamber (240), in particular by means of a partition (220) extending along a longitudinal extension (LE) of the drying agent container (110), wherein
- the first chamber (230) and the second chamber (240) are pneumatically connected, in particular via at least one opening (225) in the partition.

3. Air dryer housing (104) according to claim 2, **characterized in that**- the connection device (140) has a first connection piece (143.1) and a second connection piece (143.2), wherein the first connection piece (143.1) in particular has a first preload spring receptacle (136.1), and the second connection piece (143.2) is formed by the valve body (122).

4. Air dryer housing (104) according to any of the preceding claims, **characterized in that** the connection device (140), in particular the connection flange (141), has at least one pneumatic connection means (11, 12, 13, 14), in particular a compressor connector (11), a pneumatic connector (12), a vent connector (13) and/or a regeneration connector (14), wherein
- the at least one pneumatic connection means (11, 12, 13, 14) is formed as a recess, in particular as at least one channel and/or at least one bore, in the connection device (140), preferably on a connection face (147).

5. Air dryer housing (104) according to any of the preceding claims, **characterized in that** the connection device (140) is designed as a connection flange (141), or
- the connection device (140) is designed as a connection group (174) having a dryer flange (176) and a compressor flange (178), in particular wherein
- at least one pneumatic connection means (11, 12, 13, 14) in the dryer flange (176) is assigned a corresponding pneumatic remote connection means (11', 12', 13', 14') in the compressor flange (178) and each pneumatic connection means (11, 12, 13, 14) is pneumatically connected in each case to the corresponding pneumatic remote connection means (11', 12', 13', 14'), in particular via a connecting line (261, 262, 263, 264).

6. Air dryer housing (104) according to any of the preceding claims, **characterized in that** the valve body (122) has a valve body diameter (DV) which is smaller than a drying agent container diameter (DT) of the drying agent container (110), so that a flow gap (164) is formed in a radial space between the valve body (122) and the drying agent container (110) to guide the compressed air flow (DL) past the valve body (122).

7. Air dryer housing (104) according to any of the preceding claims, **characterized in that**
- the valve piston (124) has a relay surface (AR) and a switching surface (AS), wherein the relay surface (AR) is larger than the switching surface (AS), in particular the valve piston (124) is designed as a stepped cylinder, and
- the relay surface (AR) can be acted upon with compressed air (DL) via the regeneration connector (14) in order to move the valve piston (124) into the regeneration position (120B) in which the switching surface (AS) lifts from a vent valve seat (128) of the valve body (122).

8. Air dryer housing (104) according to any of the preceding claims, **characterized in that**
- the valve body (122) has a cover membrane (130) which is fastened to the valve body (122), in particular in a pressure-sealed manner, in order to form a valve interior (125), wherein
- the cover membrane (130) has a return spring receptacle (134) on the face facing the valve interior (125) for receiving the return spring (126), and/or
- has a preload spring receptacle (136) on the face facing away from the valve interior (125) for receiving a preload spring (138, 138.1, 138.2), in particular a second preload spring receptacle (136.2) for receiving a second preload spring (138.2), wherein the preload spring (138, 138.1, 138.2) is designed to apply a preload force (FV) to the drying agent (300).

9. Air dryer housing (104) according to any of the preceding claims, **characterized by** a damping cushion (170), in particular made from an elastomer, arranged between the vent valve seat (128) and the switching surface (AS) and/or
- **by** a damping disc (172), in particular made from an elastomer, arranged between the valve piston (124) and the cover membrane (130).

10. Air dryer housing (104) according to any of the preceding claims, **characterized by** a regeneration switching valve (72), in particular designed as a 2/2-way solenoid valve, wherein the regeneration switching valve (72) is designed to selectively establish a pneumatic connection between a pneumatic main line (50) and the regeneration connector (14).

11. Air dryer arrangement (100) comprising:
- an air dryer housing (104) according to any of claims 1 to 10 comprising a drying agent container (110) for filling with drying agent (300), and a connection device (140), in particular a connection flange (141), for a compressed air supply (1000),
- a drying agent (300), in particular wherein the drying agent (300) is loose and/or granular, wherein
the connection device (140) is designed for connecting the air dryer housing (104) of the air dryer arrangement (100) to the compressed air supply (1000), in particular the compressed air supply (1000) is a compressed-air supply system (1001) for operating a pneumatic system (1002) by means of a compressed air flow (DL).

12. Compressed-air supply system (1001) for supplying a pneumatic system (1002), in particular an air suspension system (1003) of a vehicle (1200), preferably a passenger car (1201), wherein the compressed-air supply system (1001) comprises an air dryer housing (104) according to any of claims 1 to 10 or an air dryer arrangement (100) according to claim 11.

13. Vehicle (1200), in particular a passenger car (1201), comprising a pneumatic system (1002), in particular an air suspension system (1003) comprising an air dryer housing (104) according to any of claims 1 to 10 or an air dryer arrangement (100) according to claim 11 or a compressed-air supply system (1001) according to claim 12.

## Revendications

1. Boîtier (104) de sécheur d'air présentant un réservoir (110) d'agent de séchage destiné à être rempli d'agent de séchage (300) et un dispositif de raccordement (140), en particulier une bride de raccordement (141), destiné à une alimentation en air comprimé (1000) comportant un flux d'air comprimé (DL), dans lequel le dispositif de raccordement (140) est conçu pour raccorder le boîtier (104) de sécheur d'air à l'alimentation en air comprimé, dans lequel
- le dispositif de raccordement (140) peut être relié de manière étanche à la pression au réservoir (110) d'agent de séchage sur un côté réservoir (145) situé du côté agent de séchage, dans lequel
- le dispositif de raccordement (140) présente, du côté agent de séchage, un corps (122) de soupape faisant saillie dans le réservoir (110) d'agent de séchage, corps de soupape dans lequel un piston (124) de soupape peut se déplacer, et
- le corps (122) de soupape et le piston (124) de soupape forment une unité soupape de purge (120), qui est conçue comme une soupape relais (121) pneumatique,
- le dispositif de raccordement (140) est conçu pour pouvoir être relié au système d'alimentation en air comprimé (1001) au niveau d'un côté de raccordement (147) situé du côté installation, et
- le réservoir (110) d'agent de séchage peut être traversé par un flux d'air comprimé (DL) dans une première position (120A) du piston (124) de soupape, dans une première direction (R1), et dans une seconde position (120B) du piston (124) de soupape dans une seconde direction (R2), **caractérisé en ce que**
- le dispositif de raccordement (140) est conçu d'une seule pièce avec le corps (122) de soupape, et/ou
- le corps (122) de soupape et l'unité soupape de purge (120) font saillie entièrement dans le réservoir (110) d'agent de séchage et/ou sont entièrement agencés à l'intérieur du réservoir (110) d'agent de séchage.

2. Boîtier (104) de sécheur d'air selon la revendication 1,
**caractérisé en ce que** le boîtier (104) de sécheur d'air est conçu pour un sécheur d'air à double chambre (102), dans lequel le réservoir (110) d'agent de séchage présente un espace intérieur (215) de réservoir divisé en une première chambre (230) et une seconde chambre (240), en particulier par le biais d'une nervure (220) s'étendant le long d'une extension longitudinale (LE) du réservoir (110) d'agent de séchage, dans lequel
- la première chambre (230) et la seconde chambre (240) sont reliées pneumatiquement, en particulier par l'intermédiaire d'au moins une ouverture (225) dans la nervure.

3. Boîtier (104) de sécheur d'air selon la revendication 2,
**caractérisé en ce que** le dispositif de raccordement (140) présente un premier tube de raccordement (143,1) et un second tube de raccordement (143,2), dans lequel le premier tube de raccordement (143,1) présente en particulier un premier logement de ressort de précontrainte (136,1), et le second tube de raccordement (143,2) est formé par le corps (122) de soupape.

4. Boîtier (104) de sécheur d'air selon l'une des revendications précédentes, **caractérisé en ce que** le dispositif de raccordement (140), en particulier la bride de raccordement (141), présente au moins un raccord pneumatique (11, 12, 13, 14), en particulier un raccord de compresseur (11), un raccord pneumatique (12), un raccord de purge (13) et/ou un raccord de régénération (14), dans lequel
- l'au moins un raccord pneumatique (11, 12, 13, 14) est conçu sous la forme d'une moulure, en particulier d'au moins un canal et/ou d'au moins un alésage, dans le dispositif de raccordement (140), de préférence sur un côté de raccordement (147).

5. Boîtier (104) de sécheur d'air selon l'une des revendications précédentes, **caractérisé en ce que** le dispositif de raccordement (140) est conçu sous la forme de bride de raccordement (141), ou
- le dispositif de raccordement (140) est conçu sous la forme d'un ensemble de raccordement (174) comportant une bride de sécheur (176) et une bride de compresseur (178), en particulier dans lequel
- un raccord pneumatique distant (11', 12', 13', 14') correspondant dans la bride de compresseur (178) est associé à au moins un raccord pneumatique (11, 12, 13, 14) dans la bride de sécheur (176), et chaque raccord pneumatique (11, 12, 13, 14) est relié pneumatiquement respectivement au raccord pneumatique distant (11', 12', 13', 14') correspondant, en particulier par l'intermédiaire d'une conduite de raccordement (261, 262, 263, 264).

6. Boîtier (104) de sécheur d'air selon l'une des revendications précédentes, **caractérisé en ce que** le corps (122) de soupape présente un diamètre de corps de soupape (DV) inférieur à un diamètre de réservoir d'agent de séchage (DT) du réservoir (110) d'agent de séchage, de sorte qu'une fente de flux (164) est formée dans un espace intermédiaire radial entre le corps (122) de soupape et le réservoir (110) d'agent de séchage afin de guider le flux d'air comprimé (DL) le long du corps (122) de soupape.

7. Boîtier (104) de sécheur d'air selon l'une des revendications précédentes, **caractérisé en ce que**
- le piston (124) de soupape présente une surface relais (AR) et un bouton de commande (AS), dans lequel la surface relais (AR) est conçue sous forme cylindrique étagée pour être plus grande que le bouton de commande (AS), en particulier que le piston (124) de soupape, et
- la surface relais (AR) peut être alimentée en air comprimé (DL) par l'intermédiaire du raccord de régénération (14) afin de déplacer le piston (124) de soupape vers la position de régénération (120B) dans laquelle le bouton de commande (AS) se soulève d'un siège (128) de soupape de purge du corps (122) de soupape.

8. Boîtier (104) de sécheur d'air selon l'une des revendications précédentes, **caractérisé en ce que**
- le corps (122) de soupape présente une membrane de recouvrement (130) qui est fixée, en particulier de manière étanche à la pression, sur le corps (122) de soupape afin de former un espace intérieur (125) de soupape, dans lequel
- la membrane de recouvrement (130) présente, sur le côté tourné vers l'espace intérieur (125) de soupape, un logement de ressort de rappel (134) destiné à loger le ressort de rappel (126), et/ou
- présente, sur le côté tourné à l'opposé de l'espace intérieur (125) de soupape, un logement de ressort de précontrainte (136) destiné à loger un ressort de précontrainte (138, 138,1, 138,2), en particulier un second logement de ressort de précontrainte (136,2) destiné à loger un second ressort de précontrainte (138,2), dans lequel le ressort de précontrainte (138, 138,1, 138,2) est conçu pour exercer une force de précontrainte (FV) sur l'agent de séchage (300).

9. Boîtier (104) de sécheur d'air selon l'une des revendications précédentes, **caractérisé par** un coussin d'amortissement (170) formé en particulier en élastomère et agencé entre le siège (128) de soupape de purge et le bouton de commande (AS), et/ou
- par un disque d'amortissement (172) formé en particulier en élastomère et agencé entre le piston (124) de soupape et la membrane de recouvrement (130).

10. Boîtier (104) de sécheur d'air selon l'une des revendications précédentes, **caractérisé par** une soupape de commande de régénération (72), conçue en particulier sous forme de soupape magnétique à 2/2 voies, dans lequel la soupape de commande de régénération (72) est conçue pour établir de manière sélective une liaison pneumatique entre une conduite pneumatique principale (50) et le raccord de régénération (14).

11. Agencement de sécheur d'air (100) présentant :
- un boîtier (104) de sécheur d'air selon l'une des revendications 1 à 10, présentant un réservoir (110) d'agent de séchage destiné à être rempli d'agent de séchage (300) et un dispositif de raccordement (140), en particulier une bride de raccordement (141), pour une alimentation en air comprimé (1000),
- un agent de séchage (300), en particulier dans lequel l'agent de séchage (300) est conçu sous forme en vrac et/ou granulaire, dans lequel
le dispositif de raccordement (140) est conçu pour raccorder le boîtier (104) de sécheur d'air de l'agencement de sécheur d'air (100) à l'alimentation en air comprimé (1000) ; en particulier, l'alimentation en air comprimé (1000) est un système d'alimentation en air comprimé (1001) destiné à faire fonctionner un système pneumatique (1002) à l'aide d'un flux d'air comprimé (DL).

12. Système d'alimentation en air comprimé (1001) destiné à alimenter un système pneumatique (1002), en particulier un système de suspension pneumatique (1003) d'un véhicule (1200), de préférence d'une voiture de tourisme (1201), dans lequel le système d'alimentation en air comprimé (1001) présente un boîtier (104) de sécheur d'air selon l'une des revendications 1 à 10 ou un agencement de sécheur d'air (100) selon la revendication 11.

13. Véhicule (1200) comportant un système pneumatique (1002), en particulier un système de suspension pneumatique (1003), en particulier voiture de tourisme (1201), présentant un boîtier (104) de sécheur d'air selon l'une des revendications 1 à 10, ou un agencement de sécheur d'air (100) selon la revendication 11, ou un système d'alimentation en air comprimé (1001) selon la revendication 12.
